# EUROPEAN PATENT APPLICATION

(11) **EP 1 258 752 A1**
(43) Date of publication of application: **20.11.2002**
(21) Application number: 01901469.5
(22) Date of filing: 19.01.2001
(51) Int. Cl.: G02B 6/12, H05B 3/10, H05B 3/18, H05B 3/20

(54) **HEATER MODULE AND OPTICAL WAVEGUIDE MODULE**

(30) Priority: 28.01.2000 JP 2000020283; 08.03.2000 JP 2000063733
(71) Applicant: Sumitomo Electric Industries, Ltd., Osaka-shi, Osaka 541-0041 (JP)
(72) Inventor: HIROSE, Yoshiyuki, Itami Works of Sumitomo Elec., Itami-shi, Hyogo 664-0016 (JP); TOMIKAWA, Tadashi, Itami Works of Sumitomo Elec., Itami-shi, Hyogo 664-0016 (JP); SAITO, Hirohisa, Itami Works of Sumitomo Elec., Itami-shi, Hyogo 664-0016 (JP); TATOH, Nobuyoshi, Itami Works of Sumitomo Elec., Itami-shi, Hyogo 664-0016 (JP); NATSUHARA, Masuhiro, Itami Works of Sumitomo Elec., Itami-shi, Hyogo 664-0016 (JP); NAKATA, Hirohiko, Itami Works of Sumitomo Elec., Itami-shi, Hyogo 664-0016 (JP); SAITO, Masahide, Itami Works of Sumitomo Elec., Itami-shi, Hyogo 664-0016 (JP); FUJIMORI, Naoji, Itami Works of Sumitomo Elec., Itami-shi, Hyogo 664-0016 (JP)
(74) Representative: Cross, Rupert Edward Blount
(86) International application number: JP0100352
(87) International publication number: WO01055758

(57) **Abstract**

The heater module (30) for heating an optical waveguide device (2) is provided with a ceramics heater (40) having a heating circuit (42) adapted to generate heat when energized and an AlN ceramics layer (44) stacked on the heating circuit.

## Description

### Technical Field

The present invention relates to a heater module for heating an optical waveguide device, and an optical waveguide module.

### Background Art

Peltier devices and heater modules have conventionally been utilized as temperature regulating devices for optical waveguide devices provided in optical waveguide modules. The optical waveguide devices are hard to seal airtightly since they are required to be formed with a passage for introducing therein an optical fiber used for transmitting optical signals to external devices. Since Peltier devices, which are susceptible to moisture, are hard to ensure reliability in a non-airtight state, the temperature of optical waveguide devices has been adjusted by heater modules in general. Such a heater module has a heating circuit (resistance), which is adapted to generate heat when energized, within an electrically insulating layer, so that the heat from the heating circuit is transmitted to an optical waveguide device byway of the electrically insulating layer .

### Disclosure of the Invention

However, the above-mentioned conventional technique has problems as follows. Namely, when an optical waveguide device has a large temperature distribution therewithin, not only its refractive index varies from place to place, but also dimensions of the optical waveguide vary due to differences in thermal expansion of the substrate, whereby wavelength selectivity and switching characteristics may be disturbed. Therefore, the temperature uniformity is necessary within the optical waveguide device. Therefore, ceramics heaters made of alumina (with a thermal conductivity of 20 W/mK) and the like have often been used conventionally. However, tendencies to increase the capacity and speed in the field of optical communications have been becoming remarkable in particular nowadays, and optical waveguide devices having a large area have recently come into use along with the shift to D-WDM (Dense-Wavelength Division Multiplexing) . Further, there has been an increasing demand for multiplexing a greater number of signals within a certain frequency width than before, thus requiring a higher uniformity in temperature. Though it has consequently been desired that the temperature uniformity within the optical waveguide device be further enhanced so as to attain a temperature distribution of ±0.5°C or less, conventional heaters have failed to meet this requirement.

Conventional optical waveguide modules have a thickness of about 20 mm in general, whereas the other modules have a thickness of about 10 mm in general. Therefore, apparatus mounted with optical waveguide modules cannot employ design rules used when designing an apparatus constituted by the other modules alone, but necessitate a specific design, which may be problematic in terms of design efficiency, design cost, and apparatus cost, whereby there is a strong desire for reducing the thickness of optical waveguide modules.

Further, since the optical waveguide devices are always heated by heaters during their operations, their power consumption is needed to be as low as possible.

In view of such circumstances, it is an object of the present invention to provide a heater module and an optical waveguide module which can improve the temperature uniformity of an optical waveguide device, while having a small thickness and exhibiting a reduced power consumption.

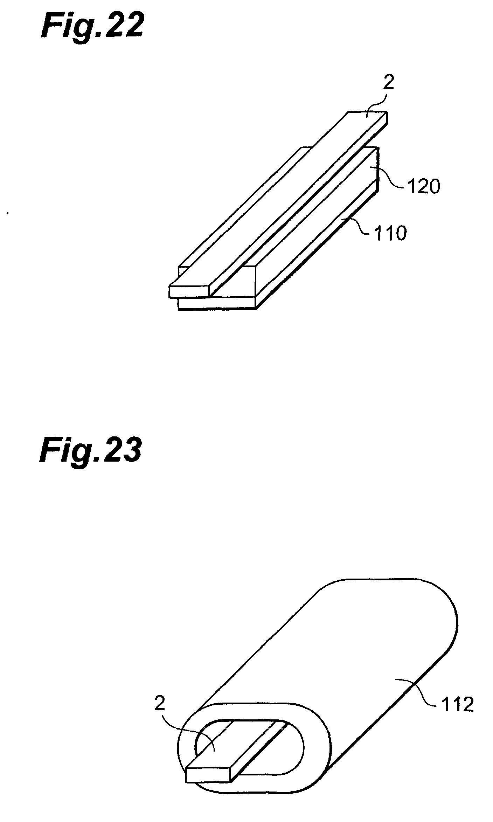

Means considerable for improving the temperature uniformity of an optical waveguide device, which is one of the objects, include (1) a method in which, as shown in Fig. 22, in order for the heat generated in a conventionally employed ceramics heater 110 made of alumina to be transmitted to an optical waveguide device 2 uniformly, a heat spreader 120 made of Cu (having a thermal conductivity of 390 W/mK) or the like is inserted between the ceramics heater 110 and optical waveguide device 2; (2) a method in which, as shown in Fig. 23, a flexible heater 112 made of rubber having a very low thermal conductivity of 1 W/mK or less is provided so as to heat the optical waveguide device 2 not only from the lower part thereof but also as a whole; and the like.

As a result of investigations concerning the above-mentioned methods, it has been found that the temperature uniformity of the optical waveguide device can become ±0.5°C in the above-mentioned method of (1) when the heat spreader 120 made of Cu has a thickness of about 3 mm. Due to the thickness of Cu, however, the thickness of the optical waveguide module cannot be reduced. Though there has been a strong demand for making the optical waveguide module with a thickness of 10 mm or less since the other modules have a thickness of 10 mm or less as mentioned above, it has been found that the thickness of optical waveguide module becomes about 20 mm since the heat spreader 120 is necessary. Also, this has been found to be a main reason why the conventional optical waveguide modules have a very large thickness.

Though the above-mentioned method of (2) can also make the optical waveguide device 2 attain a temperature uniformity of ±0.5°C, it fails to reduce the thickness as with (1), and is also problematic in that the power consumption of heater cannot be lowered, since it has a structure for heating the whole optical waveguide device 2 or the whole module. Namely, while the power consumption in the technique of (1) was about 5 W in the case where the optical waveguide was held at 80°C in an environment at a temperature of 0°C, the power consumption was 10 W or more in the technique of (2), thus being at least twice as much as that in the former technique. This also opposed the demand for making the power consumption as low as possible.

The inventors further advanced studies and, as a result, have found that, for satisfying the temperature uniformity, thicknesses of the heater module and optical waveguide module, and lowpower consumption, which are required characteristics, at the same time, improving the thermal conductivity of the ceramics heater material itself without using the heat spreader 120 and the like is the most effective. This structure not only can improve the temperature uniformity of the optical waveguide device 2, but also can reduce the thickness of optical waveguide module since it uses no heat spreader. Further, to heat the heat spreader is unnecessary, whereby a low power consumption can be achieved.

Further studies by use of thermal simulations and the like have revealed that a thermal conductivity of 100 W/mK or higher is necessary for ceramics, which restricts materials to BeO and AlN. However, BeO has been known to have toxicity, thus leading to a conclusion that a ceramics heater using AlN as a ceramics material is the most suitable as a heater.

Namely, the heater module of the present invention is a heater module for heating an optical waveguide device, the heater module comprising a ceramics heater having a heating circuit adapted to generate heat when energized and an AlN ceramics layer stacked on the heating circuit.

In the heater module of the present invention, since the ceramics layer in the ceramics heater is formed by AlN having a high thermal conductivity, the heat transmitted from the heating circuit diffuses into the ceramics layer substantially uniformly, whereby an optical waveguide device mounted on the ceramics layer is heated uniformly. Specifically, the temperature distribution within the optical waveguide device can be made ±0.5°C or less.

Also, it is unnecessary to provide a heat spreader of Cu, Cu alloys, or the like, whereby the thickness of heater module can be reduced. Specifically, an optical waveguide module comprising this heater module can have a thickness of 10 mm or less.

Further, since no heat spreader is necessary, the power consumption can be lowered. Specifically, while a power consumption of about 5 W is necessary when a heat spreader having a thickness of about 3 mm made of Cu or a Cu alloy is inserted in an alumina heater, the power can be lowered to about 4 W when an AlN heater is used, since the heat spreader can be omitted thereby.

Preferably, the heater module of the present invention further comprises an insulating substrate supporting the ceramics heater and having a thermal insulating characteristic.

When the ceramics heater is supported by the insulating substrate having a thermal insulating characteristic as such, the heat generated by the heating circuit is prevented from being released from the insulating substrate and thereby causing the ceramics heater to have a large thermal distribution, so that the temperature uniformity of the optical waveguide device can further be improved.

The insulating substrate may contain alumina, or alumina and silica glass. Also, the insulating substrate may contain a resin, or a resin and silica glass.

Preferably, in the heater module of the present invention, the insulating substrate has a plurality of protrusions for supporting the ceramics heater, whereas an air layer is formed about each protrusion. When such a configuration is employed, the ceramics heater is supported by a plurality of protrusions, so that it is in contact with the insulating substrate not totally but partially, whereby the ceramics heater is hard to warp even when the insulating substrate and the protrusions are bonded to each other with a resin, and the resin is prevented from peeling off from the ceramics heater. Further, since an air layer is formed about each protrusion, i.e., between the ceramics heater and the insulating substrate, the air layer can become an insulating layer which restrains the heat generated by the ceramics heater from being released from the insulating substrate side. Preferably, the air layer formed as an insulating layer has a thickness of at least 0.01 mm but not greater than 5 mm.

The ceramics heater and the insulating substrate may be bonded to each other with a resin as well. For improving the bonding strength of the resin, it is preferred that a surface of the ceramics heater bonded to the resin is controlled so as to have a surface roughness of at least 0.05 µm but not greater than 10 µm in terms of Ra. Similarly, for improving the bonding strength with respect to the resin, the surface of the ceramics heater bonded to the resin may be formed with an oxide layer, a glass coat layer, or an Al layer by vapor deposition.

As a method of securing the ceramics heater and the insulating substrate to each other, the insulating substrate may be fastened to the ceramics heater with screws through holes formed in the ceramics heater. Also, pressing means for pressing the ceramics heater toward the insulating substrate may be provided, so as to secure the ceramics heater to the insulating substrate.

Preferably, the heater module of the present invention further comprises a temperature detecting device for detecting a temperature of the ceramics heater, whereas the temperature detecting device is bonded to a surface of the ceramics heater opposite from a surface mounted with the optical waveguide, the insulating substrate having a predetermined cutout in which an electrode connected to the temperature detecting device is disposed.

When such a configuration is employed, since a temperature detecting device such as thermistor is attached to a surface opposite from the surface mounted with the optical waveguide device, it becomes unnecessary to secure an area for the optical waveguide device and an area for the temperature detecting device in one surface of the ceramics heater. This can reduce the area of the ceramics heater, whereby the heater module can be made smaller. Since the heating circuit can be made smaller when the heater module becomes smaller, the power consumption can be reduced as well. Further, the insulating substrate is formed with a cutout, in which an electrode connected to the temperature detecting device is disposed. Therefore, a wire for connecting the temperature detecting device and the electrode to each other can pass through the cutout, whereby the wiring can be simplified.

Preferably, in this case, a wire connecting the temperature detecting device to an external power supply for supplying the temperature detecting device with electric power is in contact with the ceramics heater.

When the above-mentioned wire is in contact with the ceramics heater, measuring the temperature of the ceramics heater is less likely to be influenced by ambient temperature, whereby appropriate measuring the temperature can be carried out.

Preferably, the heater module of the present invention further comprises a second AlN ceramics layer under the heating circuit. When such a configuration is employed, the moisture-resistant characteristic of the ceramics heater can be improved, whereby the durability of heating circuit can be improved.

The heating circuit can be formed from tungsten, molybdenum, or silver palladium as a main ingredient.

Preferably, the ceramics heater has a coating film mainly composed of silica glass on a surface thereof. When such a configuration is employed, the moisture-resistant characteristic of the ceramics heater can be improved. Also, it can improve the adhesion of the resin to the ceramics heater when the ceramics heater and the insulating substrate are to be bonded to each other with a resin, for example.

Preferably, the heater module of the present invention is configured such that a current stops flowing through the heating circuit at a predetermined temperature or higher. Specifically, it is preferred that a part of the heating circuit be formed from an alloy of tin and lead, or the heating circuit and a terminal connected to an external power supply be connected to each other with a wire formed from an alloy of tin and lead. Such a configuration can prevent the heater module from breaking, igniting, and so forth when temperature rises due to malfunctions of the heater module.

The optical waveguide device of the present invention comprises the heater module of the present invention, and an optical waveguide device mounted on the ceramics heater of the heater module. Since the heater module is provided, the temperature uniformity of the optical waveguide device can be improved, and the optical waveguide module becomes one having a small thickness and a lowered power consumption.

Preferably, in the optical waveguide module of the present invention, a matching member is inserted between the optical waveguide device and the ceramics heater. The difference in the coefficient of the thermal expansion (CTE) is 3 × 10⁻⁶/°C or less between the matching member and the optical waveguide device at the room temperature.

The inventors have found that, when bonding the ceramics heater and the optical waveguide device with an adhesive or the like, an excessive thermal stress may act on the optical waveguide device if the difference between the optical waveguide device and the ceramics heater is greater than 5 × 10⁻⁶/°C at room temperature in CTE, thus yielding the fear of disturbing wavelength selectivity and switching characteristics. Further, in recent years, new optical waveguide devices formed from LiNbO₃ (having a CTE of 15 × 10⁻⁶/°C) or the like have been considered one after another, higher-density packaging and the like of devices onto the optical waveguide device have been considered, and there have been many cases requiring severer wavelength selectivity and switching characteristics, thereby making it necessary for the difference between the optical waveguide device and the ceramics heater at room temperature in CTE to become 3 × 10⁻⁶/°C or less. Hence, it can prevent the optical waveguide device from being stressed excessively that a matching member having the difference of 3 × 10⁻⁶/°C or less from the optical waveguide device at room temperature in CTE is inserted into the optical waveguide device and ceramics heater. Here, though the insertion of matching member may appear to be a technique similar to the conventional insertion of heat spreader, no heat spreader is necessary in the present invention, and the matching member is required to reduce its thickness in order to prevent the temperature uniformity of optical waveguide device from deteriorating as well, whereby it does not increase the thickness of the optical waveguide module unlike the conventional technique.

In this case, a matching member of an Fe-Ni alloy or the like is preferably used when the optical waveguide device has a low CTE of 0.5 × 10⁻⁶/°C to 1.0 × 10⁻⁶/°C, whereas a matching member of Cu or a Cu alloy is preferably used when the optical waveguide device has a high CTE of about 15 × 10⁻⁶/°C. Oxygen-free Cu, tough pitch Cu, and the like can be used as Cu, whereas brass, silicon copper, phosphor bronze, aluminum bronze, nickel bronze, and the like can be used as the Cu alloy.

Preferably, the matching member has a thickness of at least 0.1 mm but not greater than 2 mm, more preferably at least 0.3 mm but not greater than 1 mm. When the thickness is less than 0.1 mm, the matching member is affected by the CTE of the ceramics heater, so that no matching can be attained between the thermal expansion coefficients of optical waveguide device and ceramics heater. However, the thickness is preferably 0.3 mm or greater, since the matching member thinner than 0.3 mm is harder to handle. On the other hand, there is a fear of the temperature uniformity of optical waveguide device deteriorating when the matching member becomes thicker. Though no problems occur when the matching member made of Cu or a Cu alloy is made thicker, it is unfavorable for Fe-Ni alloys to have a thickness of 2 mm or greater since the temperature uniformity is greatly deteriorated thereby. Here, it is unfavorable for the matching member to have a thickness exceeding 1 mm, since the optical waveguide module inevitably increases its thickness in this case. Also, when a matching member whose thermal expansion coefficient matches that of the optical waveguide device is used as such, the matching member and the optical waveguide device can be bonded to each other with an adhesive made of a resin which attains a solid form after bonding.

Preferably, the ceramics heater and the optical waveguide device are bonded to each other with an adhesive made of a resin. When the ceramics heater and the optical waveguide device are bonded to each other with grease or the like which keeps a fluidity, the thickness of grease becomes uneven, thereby making it difficult to improve the temperature uniformity of the optical waveguide. By contrast, the adhesive attains a solid form after bonding, thereby being able to eliminate such a problem.

Preferably, in the optical waveguide module of the present invention, the surface of ceramics heater mounted with the optical waveguide device has an area smaller than that of the surface of optical waveguide device facing the same. Making the heating surface of the ceramics heater smaller than the optical waveguide device as such can further lower the power consumption.

Preferably, in this case, a matching member is disposed about the ceramics heater and the difference between a matching member and the optical waveguide device is 3 × 10⁻⁶/°C or less at room temperature in CTE, whereas the matching member and the optical waveguide device are bonded to each other. Such a configuration allows the matching member to support the optical waveguide device, although the structural stability of the optical waveguide decreases when the ceramics heater is smaller than the optical waveguide device. Also, the matching member having the CTE within the range mentioned above can prevent the optical waveguide device from being stressed. In this case, a matching member of an Fe-Ni alloy or the like is preferably used when the optical waveguide device has a low CTE of 0.5 × 10⁻⁶/°C to 1.0 × 10⁻⁶/°C, whereas a matching member of Cu or a Cu alloy is preferably used when the optical waveguide device has a high thermal expansion coefficient of about 15 × 10⁻⁶/°C.

The optical waveguide module of the present invention may further comprise a case for accommodating the optical waveguide device and ceramics heater.

Preferably, in this case, an insulating substrate supporting the ceramics heater and having a thermal insulating characteristic is provided, whereas the case accommodates the insulating substrate. When the ceramics heater is supported by the insulating substrate having a thermal insulating characteristic, the heat generated by the heating circuit is prevented from being released from the insulating substrate and thereby causing the ceramics heater to have an uneven temperature distribution, so that the temperature uniformity of the optical waveguide device can further be improved.

The heater module may constitute a part of the case as well. For example, the heater module may have a structure in which the insulating substrate thereof is a part of the case.

Preferably, the case is mainly composed of copper tungsten, cobalt, iron, nickel, alumina, or aluminum nitride. In this case, the temperature uniformity in the case has been improved, whereby the temperature uniformity of the optical waveguide device can be improved.

It will also be preferred if the case is mainly composed of a resin or silica glass. In this case, since the thermal insulating characteristic of these materials is high, the heat of the case can be restrained from being released to the outside, whereby the optical waveguide device can be prevented from lowering its temperature.

Preferably, an insulating layer having a thermal conductivity of 0.5 W/mK or less is disposed about the heater module. Such a configuration can restrain the heat of optical waveguide device from being released to the outside of the case. This insulating layer may be an air layer as well, whereas the air layer preferably has a thickness of at least 0.01 mm but not greater than 5 mm in this case.

Preferably, the case has therewithin a partition wall extending from a surface facing the optical waveguide device toward the optical waveguide device. Such a configuration can reduce the convection within the case, whereby the temperature uniformity of the optical waveguide device can be improved. Preferably, the case further comprises a sheet separated from an inner wall face of the case by a predetermined distance. Such a configuration can reduce the convection within the case, while forming an air layer between the inner wall face of the case and the sheet, whereby the air layer acts as an insulating layer. As a consequence, the heat of ceramics heater is harder to be released to the outside, whereby the heating efficiency of the optical waveguide device has been improved.

Preferably, an optical fiber is clamped on the optical waveguide device, whereas a clamping position between the optical fiber and the optical waveguide device is inside the case. Such a configuration makes it unnecessary to provide the case with a mechanism for clamping the optical fiber and the optical waveguide device to each other, whereby the flexibility in designing the case has been improved.

### Brief Description of the Drawings

Fig. 1 is a perspective view showing the heater module and optical waveguide module in accordance with a first embodiment;
Fig. 2 is a side view showing the optical waveguide module in accordance with the first embodiment;
Fig. 3 is a plan view showing the inside of the ceramics heater in accordance with the first embodiment;
Fig. 4 is a sectional view of the ceramics heater taken along the line IV-IV in Fig. 3;
Fig. 5 is a plan view showing the heater module in accordance with the first embodiment;
Fig. 6 is a side view showing the optical waveguide module in accordance with a second embodiment;
Fig. 7 is a plan view showing the heater module in accordance with the second embodiment;
Fig. 8 is a sectional view showing the ceramics heater in accordance with the second embodiment;
Fig. 9 is a side view showing the optical waveguide module in accordance with a third embodiment;
Fig. 10 is a sectional view showing the optical waveguide module in accordance with a fourth embodiment;
Fig. 11 is an enlarged perspective view showing the vicinity of a cutout in the insulating substrate in accordance with the fourth embodiment;
Fig. 12 is a side view showing the optical waveguide module in accordance with a fifth embodiment;
Fig. 13 is a perspective view showing the optical waveguide module in accordance with a sixth embodiment;
Fig. 14 is a side view showing the optical waveguide module in accordance with the sixth embodiment;
Fig. 15 is a perspective view showing the optical waveguide module in accordance with a seventh embodiment;
Fig. 16 is a side view showing the optical waveguide module in accordance with the seventh embodiment;
Fig. 17 is a perspective view showing the optical waveguide module in accordance with an eighth embodiment;
Fig. 18 is a side view showing the optical waveguide module in accordance with the eighth embodiment;
Fig. 19 is a side view showing the optical waveguide module in accordance with a ninth embodiment;
Fig. 20 is a side view showing the optical waveguide module in accordance with a tenth embodiment;
Fig. 21 is a side view showing characteristic parts of the optical waveguide module in accordance with an eleventh embodiment;
Fig. 22 is a schematic perspective view showing a conventional optical waveguide module; and
Fig. 23 is a schematic perspective view showing a conventional optical waveguide module.

### Best Modes for Carrying Out the Invention

In the following, with reference to the accompanying drawings, preferred embodiments of the heater module and optical waveguide module in accordance with the present invention will be explained in detail. Here, constituents identical to each other will be referred to with numerals identical to each other without repeating their overlapping explanations.

### First Embodiment

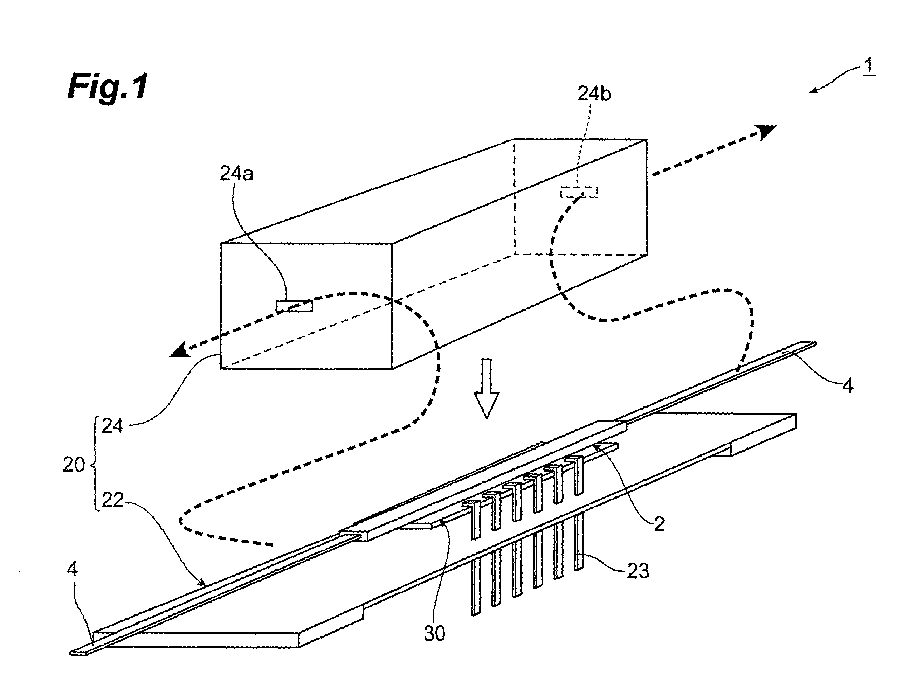

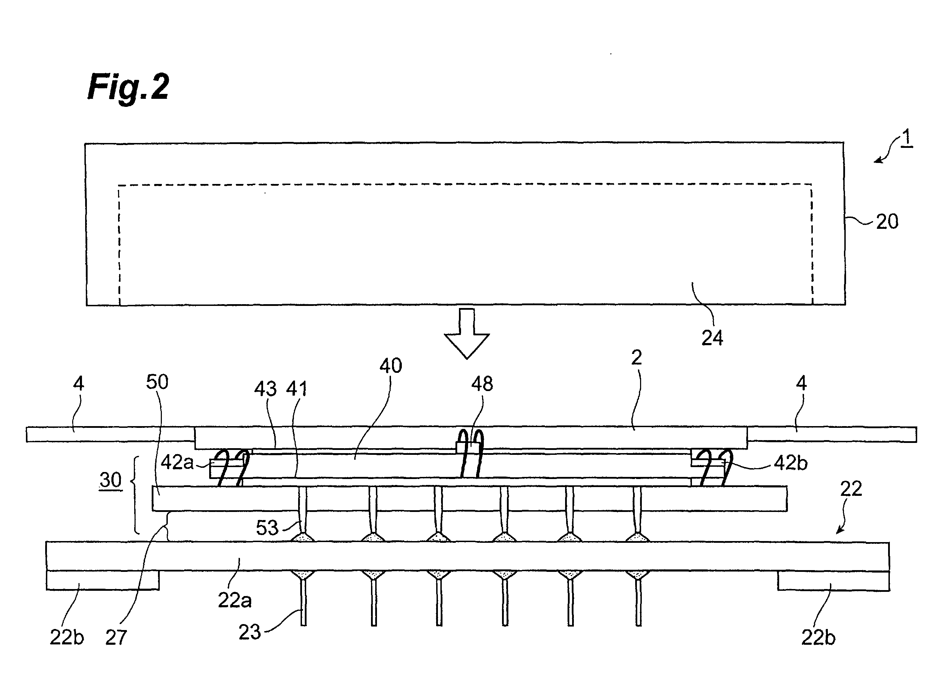

Fig. 1 is a perspective view showing the heater module in accordance with this embodiment and an optical waveguide module incorporating it therein, whereas Fig. 2 is a side view of the optical waveguide module shown in Fig. 1. The optical waveguide module 1 comprises an optical waveguide device 2 made of quartz having a size of 50 mm × 10 mm × 1 mm, optical fibers 4 connected to both ends of the optical waveguide device 2, a heater module 30 for heating the optical waveguide device 2, and a case 20 for accommodating the optical waveguide device 2 and heater module 30. The case 20 is constituted by a package substrate 22, to which lead pins 23 for energizing the heater module 30 are soldered, for supporting the heater module 30, and a cover 24 to be put on the package substrate 22. The package as a whole has a size of 100 mm × 50 mm × 10 mm.

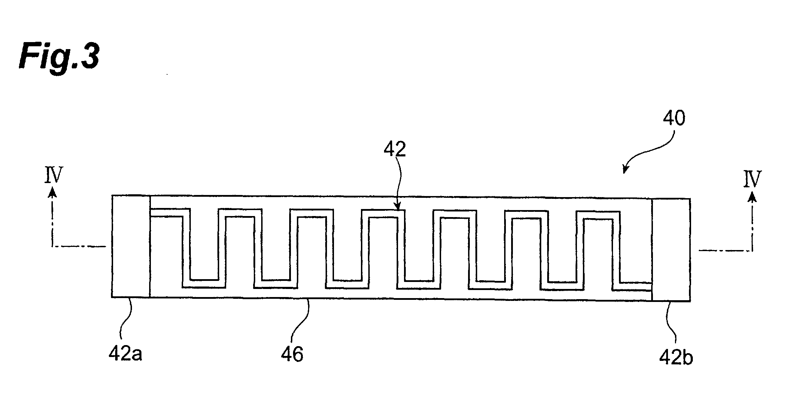

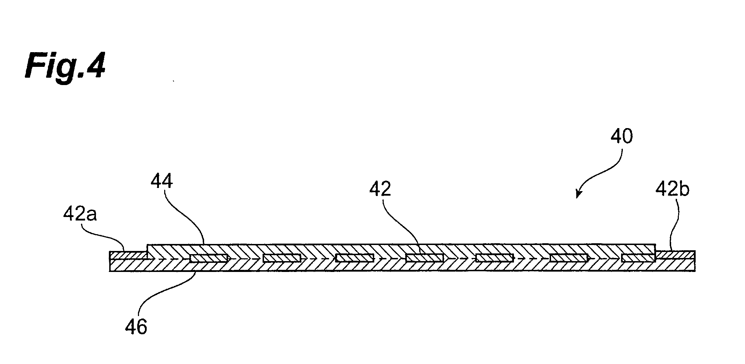

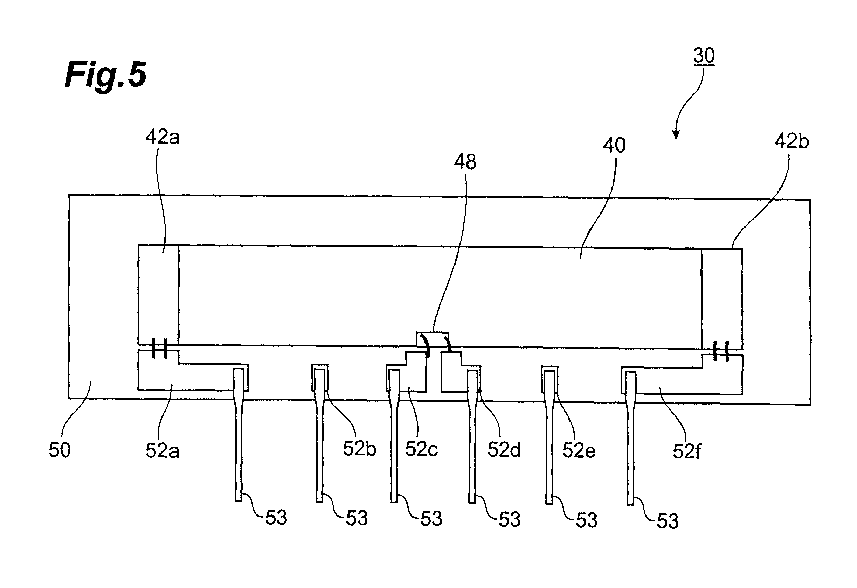

With reference to Figs. 3 to 5, the heater module 30 will now be explained in detail. The heater module 30 comprises a ceramics heater 40 having a size of 40 mm × 20 mm × 1 mm, and an insulating substrate 50 with a size of 60 mm × 30 mm × 2 mm for supporting the ceramics heater 40 and having a thermal insulating characteristic (see Fig. 5). Fig. 3 is a plan view showing the inside of the ceramics heater 40, whereas Fig. 4 is a sectional view of the ceramics heater 40 taken along the line IV-IV in Fig. 3. As shown in Figs. 3 and 4, the ceramics heater 40 is provided with a heating circuit 42, adapted to generate heat when energized, having a resistance value of about 0.5 Q to 10 Ω. Also, both ends of the heating circuit 42 are provided with electrodes 42a, 42b for causing a current to flow through the heating circuit 42, respectively.

A first AlN ceramics layer 44 is mounted as an over layer (on the upper side in Fig. 4) for the heating circuit 42, whereas a second AlN ceramics layer 46 is mounted as an underneath layer for the heating circuit 42.

Since the ceramics layer 44 is formed from AlN (aluminum nitride) having a high thermal conductivity in this embodiment as such, the heat transmitted from the heating circuit 42 diffuses substantially uniformly into the first AlN ceramics layer 44, so that the optical waveguide device 2 bonded to the upper face of the first AlN ceramics layer 44 is uniformly heated, whereby the temperature uniformity can be improved. Since AlN has a good moisture-resistant characteristic, the heating circuit 42 does not change its resistance value even when used continuously for a long term, whereby a high reliability can be obtained. Further, since the second AlN ceramics layer 46 is disposed beneath the heating circuit 42, the ceramics heater 40 improves its moisture-resistant characteristic, whereby the heating circuit 42 can improve its durability. Specifically, since the second AlN ceramics layer 46 keeps the heating circuit 42 frombeing exposed, the heating circuit 42 can be prevented from short-circuiting and oxidizing.

Preferably, the total thickness of the first AlN ceramics layer 44 and second AlN ceramics layer 46 is at least 0.3 mm but not greater than 3.0 mm. When the total thickness of AlN ceramics layers is less than 0.3 mm, the heat generated by the heater is hard to spread, whereby it becomes difficult for the optical waveguide device 2 to have a temperature uniformity of ±0.5°C or less. Also, when the total thickness of AlN ceramics layers is less than 0.3 mm, its mechanical strength is so low that handling such as bonding of the optical waveguide device becomes quite difficult. On the other hand, it will be unfavorable if the total thickness of the first AlN ceramics layer 44 and second AlN ceramics layer 46 exceeds 3.0 mm, since the optical waveguide module inevitably increases its thickness thereby, although the temperature uniformity of optical waveguide device does not deteriorate.

The heating circuit 42 can be formed from tungsten or molybdenum which can be formed at the same time when the AlN ceramics layers are molded and sintered, silver palladium allowing a technique of forming and sintering the heating circuit after AlN ceramics layers are once molded and sintered, or the like as a main ingredient. Tungsten and molybdenum can be formed simultaneously with AlN ceramics, thus being advantageous in that cost can be lowered. On the other hand, silver palladium is advantageous in that its resistance value is easily controlled with a high precision. These materials may be selected according to the order of precedence required as the optical waveguide module. Here, heating materials other than the foregoing materials do not deteriorate advantages of the ceramics heater using AlN, so that they can be used without any problem.

The thickness of the heating circuit 42 is not restricted in particular. However, for example, it is desirable that the thickness be controlled so as to become at least 1 µm but not greater than 100 µm when forming a pattern by screen printing. If the thickness is less than 1 µm, the possibility of defects such as pattern losses occurring will increase dramatically. On the other hand, it will be unfavorable if the thickness exceeds 100 µm, since defects of blotting and the like may occur frequently when the heating circuit pattern is as narrow as about 0.2 mm. For completely eliminating such defects, it is preferred that the thickness be 50 µm or less. Though a film thickness of 1 µm or less is possible when forming the heating circuit 42 from a thin film or the like, for example, it is necessary that the film thickness be such a level that the film will not break when a current flows therethrough.

As a protective layer for the heating circuit 42, a glass coating film may be formed as well. For example, a coating film mainly composed of silica glass may be formed on the surface of heating circuit 42. Such a glass coating film is further formed after the AlN ceramics layers and heating circuit are once formed. Therefore, it is advantageous in that the material of glass coating film can be selected freely. Also, since the glass coating film has a low thermal conductivity of 1 W/mK in general, it acts as a kind of insulating layer when the optical waveguide device 2 is mounted on the surface opposite from the glass coating film, thereby improving the temperature uniformity of optical waveguide device 2. Thus, forming the heating circuit 42 with a coating film can improve the moisture-resistant characteristic of ceramics heater 40.

Preferably, the thickness of glass coating film is at least 1 µm but not greater than 0.2 mm. More preferably, it is at least 10 µm but not greater than 0.2 mm. When the film thickness is less than 1 µm, it cannot cover the heating circuit 42 uniformly, thus leaving an uncoated part. Further, since differences in level exist between the heating circuit 42 and AlN ceramics 46, a film thickness of 10 µm or greater can fill the difference in level with a better yield. When the film thickness exceeds 200 µm, on the other hand, it takes an enormous time to form the film not only from a thin film but also by screen printing, which dramatically raises the cost and thus is unfavorable. Nevertheless, there will be no problem even if the coating film thickness is outside the above-mentioned range as long as the heating circuit 42 can be protected thereby in a minimally required manner.

Also, since the ceramics heater 40 is supported by the insulating substrate 50 having a thermal insulating characteristic as mentioned above in this embodiment, the heat generated by the heating circuit 42 can be prevented from being released from the insulating substrate 50 and thereby making the temperature distribution uneven in the ceramics heater 40, whereby the temperature uniformity of the optical waveguide device 2 can further be improved. When the insulating substrate 50 is not provided, in particular, the ceramics heater 40 heats not only the optical waveguide device 2 mounted thereon, but also members in contact with the surface opposite from that mounted with the optical waveguide device 2. Namely, when a member having a high thermal conductivity or a member having a large heat capacity is bonded to the surface of ceramics heater 40 opposite from the optical waveguide device 2, the heat generated by the ceramics heater 40 mainly flows into such a member rather than the optical waveguide device 2, thereby deteriorating the temperature uniformity of the optical waveguide device 2 and increasing the power consumption of ceramics heater. Supporting the ceramics heater 40 with the insulating substrate 50, by contrast, can prevent the heat generated by the heating circuit 42 from being released from the insulating substrate 50 and thereby making the temperature distribution uneven in the ceramics heater 40.

Thermal simulations have proved it preferable for the insulating substrate 50 to have a thermal conductivity of 50 W/mK or less in order to attain the effect mentioned above. Also, since the heater module and optical waveguide module can be simplified when wiring is provided within the insulating substrate 50 so as to connect with the ceramics heater electrically, it is preferred that the insulating substrate 50 be made of a material which allows wiring to be formed therewithin. For example, the insulating substrate 50 may be made of a material containing alumina and silica glass. Though the insulating substrate 50 is formed from alumina and silica glass as main ingredients, the thermal insulating characteristic can further be improved if a resin and silica glass are employed as main ingredients. In particular, it will be favorable if the insulating substrate 50 is formed from a resin, since the thermal conductivity can be made 1 W/mK or less thereby. As a resin material, glass epoxy resin, BT (bismaleimide-triazine) resin, and the like, which are typically used in printed circuit boards, can be used.

The ceramics heater 40 is prepared as follows. First, the heating circuit 42 and electrodes 42a, 42b are printed on a preform sheet of AlN ceramics with W paste. Subsequently, a preform sheet of AlN ceramics is attached onto the heating circuit 42, so as to yield a temporary form of heater. Then, this temporary form is sintered in a nitrogen atmosphere of 1700°C or higher, whereby the ceramics heater 40 is completed.

Fig. 5 is a plan view showing the heater module 30. As depicted, electrodes 52a to 52f are formed on the upper face of the insulating substrate 50, whereas the electrodes 42a, 42b of ceramics heater 40 are connected to the electrodes 52a, 52f with conductors. Disposed on the upper face of the ceramics heater 40 is a chip thermistor 48 for measuring the temperature of heater, whereas the chip thermistor 48 is connected to the electrodes 52c, 52d with conductors. Further, lead pins 53 are connected to the electrodes 52a to 52f, respectively, and are bent at right angles as shown in Fig. 2, so as to be soldered while being plugged into inserting holes of the package substrate 22. As a consequence, the individual lead pins 53 are electrically connected to their corresponding lead pins 23 of the package substrate 22. Also, since the electrodes 52a to 52f are formed on the insulating substrate 50 as mentioned above, no long wires are necessary for connecting the ceramics heater 40 to external electrodes, which facilitates assembling and packaging, thereby cutting down the cost.

Also, as shown in Fig. 2, the insulating substrate 50 and the ceramics heater 40 are bonded to each other with a resin 41, whereas the ceramics heater 40 and the optical waveguide device 2 are bonded to each other with a resin 43. While any of resins such as silicone resin and epoxy resin used for bonding electronic parts can be used as the bonding resin 41, silicone resin is used in this embodiment in order to prevent deforming from occurring at the time of bonding. Also, the first AlN ceramics layer 44 is disposed as the uppermost layer of ceramics heater 40 as mentioned above and thus can prevent the optical waveguide device 2 from warping, since AlN has a thermal expansion coefficient close to that of glass or Si forming the optical waveguide device 2 . The resin 43, which is used for bonding the optical waveguide device and AlN in this embodiment, is silicone resin. Each of the resins 41 and 43 has a thickness of about 10 µm to 0.2 mm.

In general, the resin bonding strength of AlN has been known to be lower than that of other oxide type ceramics and the like. The resin bonding strength is caused by the hydrogen bond formed between the -OH group of resin and the -O group of a metal surface, the anchor effect between materials, and their interaction. Since the surface of AlN is a nitride, only the anchor effect can contribute to bonding. As a consequence, there is a possibility of its bonding strength to a resin deteriorating depending on the surface state of AlN ceramics and the like. Therefore, it is preferred that the reliability in resin bonding strength of AlN be enhanced. For enhancing the bonding strength between the AlN ceramics layer and resin, two kinds of methods, i.e., a first method of enhancing the anchor effect and a second method of providing a layer adapted to raise the resin strength, can be considered.

As a result of various studies concerning conditions necessary for attaining a sufficient anchor effect, it has been found that the first method can be achieved if the surface roughness of the surface of AlN to be bonded to the resin is controlled strictly. Namely, it has been concluded that, when bonding the AlN heater to a package having an optical waveguide device, an insulating substrate, and the like, a sufficient bonding strength can be achieved if the ceramics heater 40 to be bonded to the resin is controlled so as to have a surface roughness of at least 0.05 µm but not greater than 10 µm, preferably at least 0.1 µm but not greater than 10 µm, in terms of Ra. When the AlN surface roughness is less than 0.05 µm, a sufficient anchor effect cannot be attained between AlN and the resin, whereby defects of the resin bonding face peeling, dropping, and so forth may occur during reliability tests or uses of the optical waveguide module. Though sufficient bonding can be realized if the above-mentioned AlN surface roughness is at least 0.05 µm when a resin having a high bonding strength such as silicone resin is used, it is preferred that the AlN surface roughness be at least 0.1 µm in order to realize sufficient bonding in all of various other resins. If the AlN surface roughness exceeds 10 µm, on the other hand, bubbles and the like will be easier to flow into the gap between AlN and the resin, whereby a sufficient anchor effect may not be obtained. Further, the resin and bubbles exist randomly in the resin bonding layer, thereby greatly deteriorating the temperature uniformity. Though the entanglement of bubbles can be prevented from occurring if the AlN surface roughness is 100 µm or less when a resin with a relatively high fluidity yielding a viscosity of about 10000 cps at the time of application is employed, it is preferred that the AlN surface roughness be 10 µm or less in order to prevent bubbles from being entangled even when viscosity rises due to changes in other resins with time.

As a result of various studies concerning a condition necessary for obtaining a layer adapted to enhance the resin strength as the second technique for enhancing the bonding strength between the AlN ceramics layer and the resin, it has been found the most effective to coat the resin bonding surface of the ceramics heater 40 with an Al layer by vapor deposition or a layer mainly composed of silica glass.

The layer adapted to enhance the resin strength necessitates a layer containing OH group or -OH group so as to strengthen the hydrogen bond with the resin, or a layer adapted to enhance the anchor strength. As the layer for strengthening the hydrogen bond to the resin, an oxide or a metal can be considered.

As such an oxide, alumina can be considered, for example. However, oxides of ceramics such as alumina are problematic in that the cost of heater becomes drastically higher, since the temperature necessary for forming a layer rises. By contrast, silica glass can suppress the cost to a low level, since its layer forming temperature can be made lower than that of alumina. Also, since silica glass can be used as a protective film for the heating circuit 42 of ceramics heater 40 as well, the resin bonding strength and reliability of the ceramics heater 40 can be improved at the same time in a single step when forming a silica glass layer, whereby the AlN ceramics heater having excellent characteristics can be made at a low cost.

As with the above-mentioned glass coating film of heating circuit, the silica glass layer formed on the surface of ceramics heater 40 preferably has a thickness of at least 1 µm but not greater than 0.5 mm, more preferably at least 10 µm but not greater than 0.1 mm. When the thickness of silica glass layer is less than 1 µm, it cannot cover AlN ceramics uniformly, thus leaving an uncoated part, whereby the resin strength cannot be enhanced sufficiently. When forming a protective layer for the heater in the same process, differences in level exist in the heater layer, whereby the layer thickness is required to be at least 10 µm in order to fill the differences in level. When the silica glass layer has a thickness exceeding 500 µm, on the other hand, glass itself may break and cannot be used after a reliability test since the strength of glass itself is low, although the resin bonding is sufficient. Though a film thickness smaller than that can be used, an enormous time is necessary for forming a film thicker than 100 µm, which dramatically increases the cost, whereby it is further preferred that the layer thickness be 100 µm or less.

Though the forming of silica glass layer is not restricted in particular, a method comprising the steps of printing glass paste by use of screen printing or the like and baking it upon firing, and the like may be used since the silica glass layer is required to be formed in limited areas such as the resin bonding part and heater part.

In the forming of a layer using a metal, on the other hand, metals other than Al, Ni, Au, and the like oxidize, thus corroding the surface thereof and failing to keep a bonding strength at the same. On the other hand, Ni and Au used as a protective film for metals have a smaller quantity of OH group and -O group on the surface, thus yielding a very low bonding strength with respect to the resin after a reliability test in particular. By contrast, Al is favorable in that its resin strength is relatively high since its surface is always oxidized. It has further been found that the resin strength does not increase but decreases even when the Al film is intentionally oxidized more than a naturally oxidized film. Further studies have revealed that the resin bonding strength varies greatly depending on the method of forming an Al film. Namely, when the Al film formed by vapor deposition is used in a naturally oxidized state, an AlN ceramics heater having a very high resin bonding strength can be prepared.

Investigations of reasons why the Al film formed by vapor deposition has a high resin strength have revealed that a microscopic anchor effect contributes thereto. When an Al film is formed by vapor deposition or the like, polygonal crystal particles are generated. Though a minute difference of 1 µm or less in level exists between the crystal particles, this difference in level cannot be detected at the time when measuring the surface roughness. This crystal particle size and its accompanying difference between crystals in level generate a sufficient anchor effect. Namely, when the crystal particle size is controlled so as to become at least 0.1 µm but not greater than 10 µm, a sufficient anchor effect can be yielded. When the crystal particle size is less than 0.1 µm, the resin used for bonding cannot sufficiently enter gaps between crystals, whereby holes are likely to occur. The breakage of Bond is likely to occur from the holes acting as starting points. When the crystal particle size exceeds 10 µm, though the resin can enter gaps between crystals, the number of particles per area contributing to the anchor effect becomes smaller, whereby a sufficient bonding strength cannot be obtained.

In a structure which can yield a sufficient anchor effect as mentioned above, it is not required to form an oxidized film in particular. Namely, a naturally oxidized film thickness of at least 10 × 10⁻¹⁰ m but not greater than 800 × 10⁻¹⁰ m is desirable. In the state without a naturally oxidized film, no hydrogen bond occurs with respect to the resin, whereby a sufficient bonding strength cannot be maintained. When an oxidized film having a thickness exceeding 800 × 10⁻¹⁰ m is formed, the bonding strength between the oxidized film and a matrix metal cannot be secured since the metal oxide film is brittle, though the bonding strength between the resin and oxidized film is unproblematic.

The Al film thickness to be formed is desirably at least 1 µm but not greater than 100 µm. When the Al film thickness is less than 1 µm, a structure is not sufficient for yielding an anchor effect. That exceeding 100 µm is unfavorable since breakage is likely to occur within the film. Also, that exceeding 20 µm is problematic in terms of economy since the cost and time for forming the film become enormous. Therefore, the Al film thickness is more preferably at least 1 µm but not greater than 20 µm.

The Al film to be formed may be either Al or an Al alloy. Desirably, the Al alloy has a purity of 99.9 wt% or higher, since its composition is hard to control at the time of forming the film, and since its adhesion to the matrix is likely to fluctuate. Further, an Al film of 99.9 wt% or higher is preferable since no fluctuation in adhesion to the matrix occurs therein. Since vapor deposition can apply anAl films to various materials in a relatively simple manner, it is preferred that vapor deposition of Al film be applied to other members to be bonded to a resin in the optical waveguide module whenever possible, whereby the resin bonding strength can greatly be improved. Whether vapor deposition is applied or not may be determined in view of whether an insulating characteristic is necessary or not, since Al is a metal, and the increase in cost caused by vapor deposition.

The case 20 of optical waveguide module 1 will now be explained with reference to Figs. 1 and 2. Two opposed faces of the cover 24 of case 20 are formed with insertion ports 24a, 24b (see Fig. 1) for inserting the optical fibers 4 therethrough. The package substrate 22 has a flat plate 22a to which the lead pins 23 are soldered, and support plates 22b, 22b bonded to both lower ends of the flat plate 22a, respectively. Providing the support plates 22b as such can prevent an excessive load from being applied to the lead pins 23 when implementing the optical waveguide module 1 into a system board or the like. The cover 24 and the package substrate 22 are bonded to each other with a resin.

The cover 24 of case 20 and the package substrate 22 are formed from copper tungsten as a main ingredient. As a consequence, the temperature uniformity in the case 20 is high, whereby the temperature uniformity of optical waveguide device 2 can be improved. Similar effects can also be obtained when the case 20 is formed from cobalt, iron, nickel, alumina, or aluminum nitride as a main ingredient. Results of thermal simulations have revealed that the case 20 preferably has a thermal conductivity of 10 W/mK or higher in order to improve the temperature uniformity of the optical waveguide device 2.

When the case 20 is formed from a resin or silica glass as a main ingredient, the heat within the case 20 can be restrained from being released to the outside, since these materials have a high thermal insulating characteristic. As the resin forming the case 20, ABS resin, polyoxymethylene resin, polyether ether ketone resin, styrene resin, acrylic resin, epoxy resin, phenol resin, urea resin, melanin resin, silicone resin, fluorine resin, polycarbonate resin, polyphenylene sulfide resin, and the like, for example, can be used. Results of thermal simulations have revealed that the thermal conductivity of such resins is preferably 1 W/mK or less in order to improve the temperature uniformity of optical waveguide device 2. Further, glass fiber and the like may be mixed into these resins in order to improve the strength thereof. In this case, since these materials have a high thermal insulating characteristic, the heat within the case can be prevented from being released to the outside, whereby the optical waveguide device 2 can be prevented from lowering its temperature. Also, the case materials for improving the temperature uniformity and those for improving the thermal insulating characteristic may be formed into multiple layers or used in combination.

Also, as shown in Fig. 2, an insulating layer 27 having a thermal conductivity of 0.5 W/mK or less is disposed about the heater module 30 (between the package substrate 22 and the insulating substrate 50). In this embodiment, the insulating layer 27 is an air layer having a thickness of 1 mm. When the insulating layer 27 is provided as such, heat can efficiently be transmitted to the optical waveguide device 2. Further, the inner face of the cover 24 of case 20 is provided with an insulating layer formed by an air layer in order to restrain the heat of the optical waveguide device 2 from being released to the outside of the case 20.

Preferably, the insulating layer 27 as an air layer has a thickness within the range of at least 0.01 mm but not greater than 5 mm. For yielding a high temperature uniformity, it is important that no heat convection occur in the air layer. As a result of studies concerning conditions therefor by means of thermohydrodynamic simulations and experiments, it has been concluded that heat convection can greatly be suppressed if the air layer thickness is 5 mm or less, whereby a high temperature uniformity of the ceramics heater 40 can be secured. Though convection is less likely to occur as the air layer is thinner, the insulating substrate 50 and the package substrate 22 may come into contact with each other due to distortions in the heater module and optical waveguide module caused by heating of the heater, so that the air layer partly decreases, whereby a high temperature uniformity cannot be attained if the thickness is less than 0.01 mm.

The thickness (thickness reduction) of the heater module 30 and optical waveguide module 1 will now be explained in detail.

If the difference in CTE between the ceramics heater 40 and optical waveguide device 2 is 3 × 10⁻⁶ to 5 × 10⁻⁶/°C or greater when bonding them to each other, there is a fear of an excessive thermal stress acting on the optical waveguide device, thereby disturbing wavelength selectivity and switching characteristics. Conventionally used alumina heaters have a CTE of 7 × 10⁻⁶/°C while exhibiting a low thermal conductivity of 20 W/mK, whereby a heat spreader has been indispensable. Since such a heat spreader has a thickness of about 3 mm in general, it has been impossible for the optical waveguide module to reduce its thickness. Though a method in which the gap between the heat spreader and optical waveguide device is filled with an oil compound or grease, which is a fluid even after bonding, and then only several points at end parts are fixed with a resin, and the like have been taken into consideration in order to reduce the stress on the optical waveguide device, even the thermal stress occurring upon fixing with the resin at several points may become problematic to the optical waveguide device, so that they have not been universally usable techniques, and it has been impossible to eliminate the heat spreader, whereby the optical waveguide module has been unable to reduce its thickness.

By contrast, AlN of the ceramics heater 40 in this embodiment has a thermal conductivity of 170 W/mK, so that there is no need to use a heat spreader, whereby the thickness of optical waveguide module can be reduced greatly.

Further, while the resin 43 bonds the optical waveguide device 2 and the ceramics heater 40 to each other, this resin 43 is an adhesive attaining a solid form after bonding. Therefore, no fluctuations occur in the resin thickness, so that the resin does not flow during operations of the optical waveguide module. Desirably, the resin used for bonding the optical waveguide device 2 and the ceramics heater 40 to each other is a resin having a high thermal conductivity of about 0.5 W/mK or more containing a filler such as a metal or ceramics. Though the optical waveguide device 2 is uniformly heated by the ceramics heater 40, there is a fear of the optical waveguide device 2 deteriorating its temperature uniformity when a resin having a thermal conductivity lower than 0.5 W/mK is used.

Also, it is possible to use a method in which the gap between the optical waveguide device 2 and ceramics heater 40 is filled with the above-mentioned oil compound or grease, which is a fluid even after bonding, in place of the resin 43 and then only several points at end parts are fixed with a resin, since the difference in CTE between the optical waveguide device 2 and ceramics heater 40 is so small that no stress is applied to the optical waveguide device 2. However, the thickness of oil compound and grease must be managed strictly when this method is employed.

Preferably, the resin 43 has a thickness of at least 10 µm but not greater than 500 µm. Since the bonding resin has a Young's modulus smaller than that of other constituent materials by at least one digit, it acts to absorb the thermal stress occurring upon bonding. However, it will be unfavorable if the resin 43 has a thickness smaller than 10 µm, since absorbing stress cannot fully be exhibited thereby, so that the stress on the optical waveguide device 2 becomes greater. Since the resin 43 has a thermal conductivity lower than that of AlN and the like, its temperature uniformity deteriorates as the thickness thereof increases. It will be unfavorable if the resin 43 has a thickness exceeding 10 µm, since the temperature uniformity deteriorates.

Further, as for the power consumption of the ceramics heater 40 and optical waveguide module 1, the power consumption can be reduced greatly in this embodiment as comparedwith conventional cases using alumina heaters, since it is unnecessary to heat a heat spreader made of a Cu alloy or the like indispensable when using an alumina heater.

Also, the following safe design can be provided in the optical waveguide module 1 in accordance with this embodiment. Namely, a part of the heating circuit 42 may be formed by an alloy of tin and lead, or the heating circuit 42 and a terminal connected to an external power supply may be connected to each other with a wire formed from an alloy of tin and lead, so that thus formed part breaks when the temperature of heating circuit 42 is at the melting point of the alloy or higher, whereby no current flows through the heating circuit. Such a design can prevent the heater module frombreaking, igniting, and so forth when temperature rises due to malfunctions of the heater module.

For example, when an alloy composed of 40 wt% of tin and 60 wt% of lead is used, it will break at a temperature not higher than about 200°C, whereby the bonding resin and resins of the case and the like will not be damaged. In place of the alloy of tin and lead, other low-melting alloys may also be used.

When characteristics of the optical waveguide module 1 as explained in the foregoing were investigated, the following results were obtained. As for the temperature uniformity, viewing with a thermoviewer at an ambient temperature of 0°C with the ceramics heater 40 having a temperature of 80°C revealed that the temperature distribution within the optical waveguide device 2 was suppressed to ±0.4°C or less. Also, in order to measure the temperature controllability, the following experiment was carried out. Namely, the optical waveguide was put into a thermostat, the temperature of which was changed so as to be held at -40°C for an hour, raised to 70°C in an hour, held at 70°C for an hour, and lowered to -40°C in an hour. The temperature on the optical waveguide device at that time was measured, whereby the difference between the maximum temperature and minimum temperature was taken as an index for determining the temperature controllability. As a result, it was found that the optical waveguide device in this embodiment exhibited a temperature fluctuation of ±0.7°C or less and thus being less susceptible to influences of external temperature. Also, the warping of the ceramics heater 40 and optical waveguide device 2 was smaller, no anisotropy was seen in optical waveguide characteristics, and no defects such as increases in loss and dependence on polarization caused by switching characteristics and birefringence did not occur. Further, since the insulating characteristic within the case improved, this embodiment was capable of suppressing the power consumption to 4 W or less as compared with conventional cases necessitating a power consumption of 5 W when using a Peltier device.

### Second Embodiment

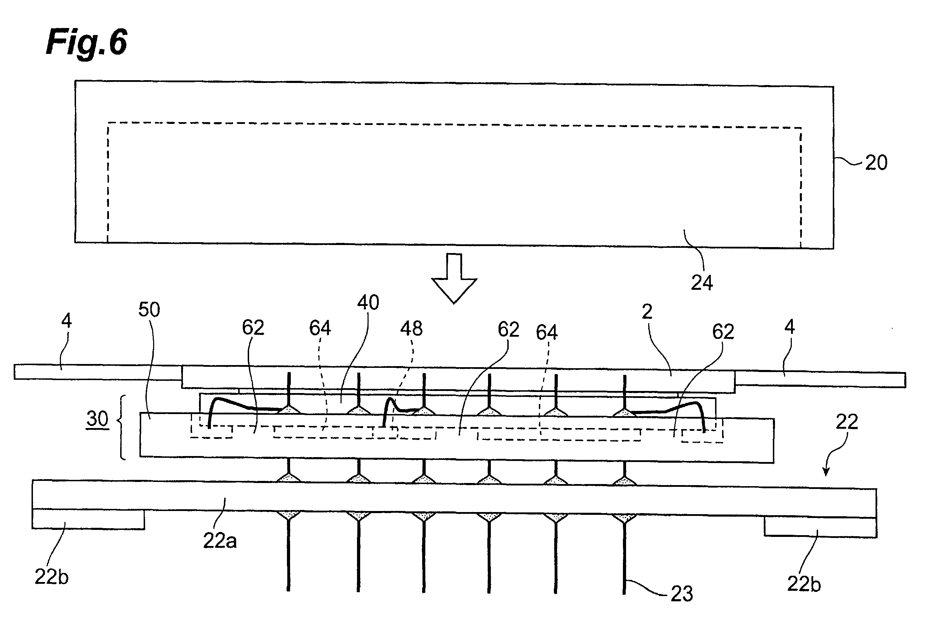

A second embodiment of the optical waveguide module in accordance with the present invention will now be explained with reference to Figs. 6 to 8. This embodiment differs from the first embodiment mainly in the structure of insulating substrate 50. In the following, points different from the first embodiment will mainly be explained.

As shown in Fig. 6, the insulating substrate 50 is formed with three protrusions 62 for supporting the ceramics heater 40. The upper face of each protrusion 62 is coated with a resin, thereby attaining adhesion to the ceramics heater 40. Since the ceramics heater 40 is in contact with the insulating substrate 50 not totally but partly in this embodiment as such, warping is harder to occur in the ceramics heater 40, and the resin for bonding the insulating substrate 50 and the ceramics heater 40 to each other can be prevented from peeling off from the ceramics heater 40. Here, instead of coating all the protrusions 62 with the resin for adhesion as in this embodiment, the resin may be applied to one protrusion 62 alone. For example, when only the center protrusion 62 is coated with a resin, both end parts of the ceramics heater 40 can expand/contract freely, whereby the warping of ceramics heater 40 can further be reduced.

In this embodiment, an air layer 64 is formed about each protrusion 62, i.e., between the bottom face of ceramics heater 40 and the surface of insulating substrate 50 facing the same. Therefore, the air layer 64 acts as an insulating layer, whereby the heat from the ceramics heater 40 can be restrained from being released from the insulating substrate 50 side. In this embodiment, the air layer has a thickness of 0.2 mm.

Preferably, the air layer has a thickness of at least 0.01 mm but not greater than 5 mm. For attaining a high temperature uniformity, it is important that no heat convection occur in the air layer. As a result of studies concerning conditions therefor by means of thermohydrodynamic simulations and experiments, it has been concluded that heat convection can greatly be suppressed if the air layer thickness is 5 mm or less, whereby a high temperature uniformity of the ceramics heater 40 can be secured. Though heat convection is less likely to occur as the air layer is thinner, the ceramics heater and its supporting insulating substrate or the like may come into contact with each other due to distortions in the heater module and optical waveguide module caused by heating of the heater if the thickness is less than 0.01 mm, thereby partly decreasing the air layer, thus failing to achieve a high temperature uniformity.

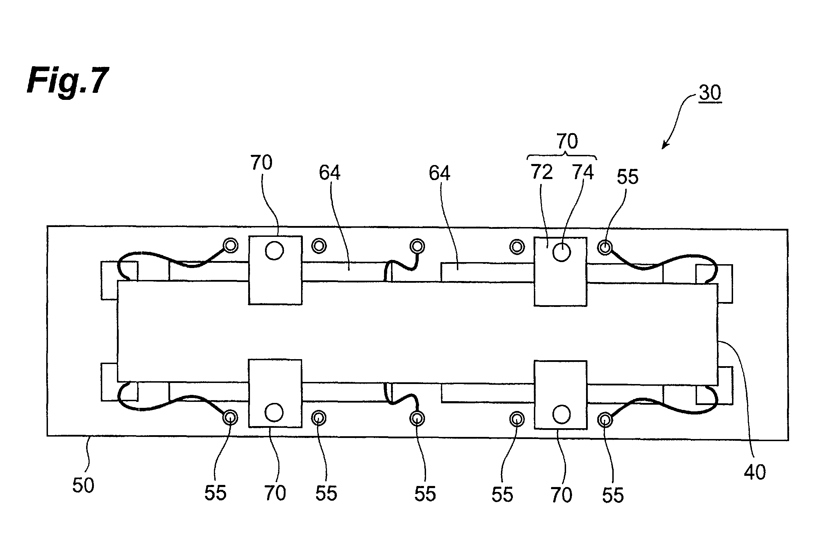

Also, as shown in Fig. 7, pressing parts (pressing means) 70 for pressing the ceramics heater 40 toward the insulating substrate 50 are provided in this embodiment. Each pressing part 70 is constituted by a pressure plate 72 mounted on the upper face of ceramics heater 40, and a screw 74 for fastening the pressure plate 72 to the insulating substrate 50. When the screw 74 is fastened firmly, the ceramics heater 40 is pressed against the insulating substrate 50. Since such pressing parts 70 pressed the ceramics heater 40 toward the insulating substrate, favorable results were obtained in vibration fatigue tests, constant acceleration tests, and moisture-resistant characteristic tests. Here, as depicted, the insulating substrate 50 is formed with a plurality of through holes 55, which are electrically connected to the heating circuit 42 of ceramics heater 40 with conductors. Also, as shown in Fig. 6, the lead pins 23 passing through the package substrate are inserted through the through holes 55.

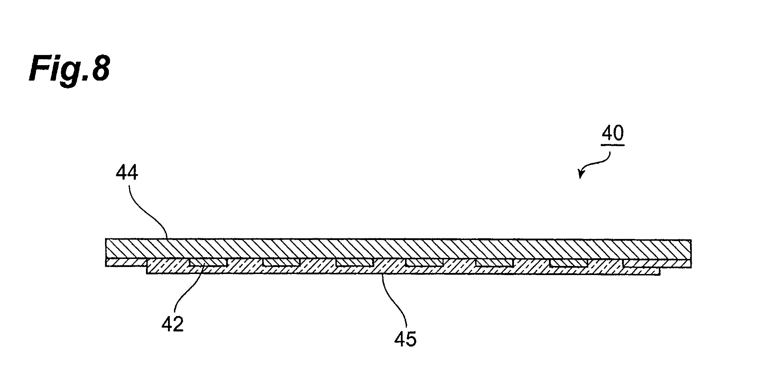

Fig. 8 is a sectional view of the ceramics heater 40 in accordance with this embodiment. As depicted, the ceramics heater 40 in accordance with this embodiment comprises the heating circuit 42 made of silver palladium, an AlN ceramics layer 44 stacked thereon, and a coating film 45 mainly composed of silica glass disposed beneath the heating circuit 42. Forming the coating film 45 on the surface of ceramics heater 40 as such can improve the moisture-resistant characteristic of ceramics heater 40. Also, when bonding the ceramics heater 40 and the insulating substrate 50 to each other with a resin, the adhesion of resin to the ceramics heater 40 can be improved.

### Third Embodiment

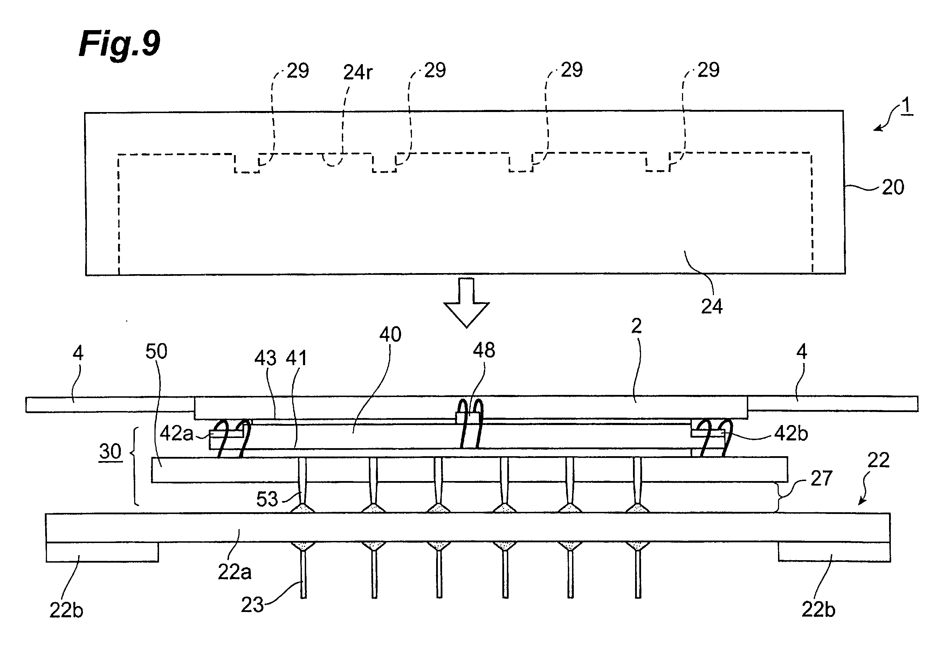

A third embodiment of the optical waveguide module in accordance with the present invention will now be explained with reference to Fig. 9. This embodiment differs from the first embodiment in the structure of case 20. As depicted, the inside of the cover 24 of case 20 is provided with four partition walls 29 extending from a surface 24r facing the optical waveguide device 2 toward the optical waveguide device 2 . The height of partition walls 29 is such that lower ends of the partition walls 29 are not in contact with the optical waveguide device 2 in a state where the cover 24 is put on the package substrate 22. Providing such partition walls 29 can reduce the convection within the case 20, i.e., the convection on the optical waveguide device 2, whereby the temperature uniformity of optical waveguide device 2 can be improved.

### Fourth Embodiment

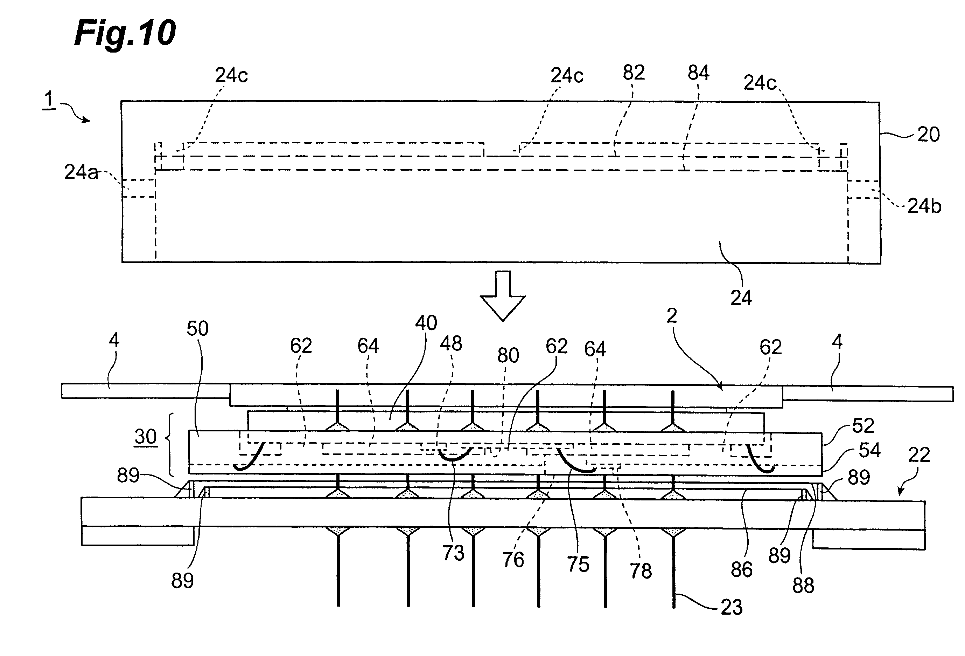

A fourth embodiment of the optical waveguide module in accordance with the present invention will now be explained with reference to Fig. 10. This embodiment differs from the first embodiment in the method of attaching the chip thermistor 48 and structures of the case 20 and cover 24.

First, the method of attaching the chip thermistor 48 will be explained in detail. As shown in Fig. 10, the thermistor (temperature detecting device) 48 for detecting the temperature of ceramics heater 40 is mounted to the bottom face of ceramics heater 40, i.e., the surface thereof opposite from the surface mounted with the optical waveguide device 2. As a consequence, there is no need for securing an area for mounting the thermistor 48 in the upper face of ceramics heater 40. Therefore, the area of ceramics heater 40 can be made smaller than that in the first embodiment, whereby the heater module 30 can reduce its size. Also, the heating circuit 42 can be made smaller, so as to lower the power consumption. While the first embodiment has a ceramics heater size of 40 mm × 20 mm × 1 mm, a heater module size of 60 mm × 30 mm × 1 mm, and a heater power consumption of 4 W at an ambient temperature of 0°C and a heater control temperature of 80°C, this embodiment can reduce the heater size to 40 mm × 12 mm × 1 mm, the heater module size to 60 mm × 20 mm × 1 mm, and the power consumption to 3.5 W. The insulating substrate 50 is formed with a cutout, in which an electrode pad 78 connecting with the thermistor 48 is disposed.

In the conventionally used alumina heater, since alumina has a low thermal conductivity, there is a large temperature difference between the surface of heater mounting the optical waveguide device and the surface opposite therefrom, whereby it has been incapable of accurately measuring the temperature of optical waveguide device at the opposite surface. By contrast, thermal simulations have found it possible to estimate the temperature of optical waveguide device 2 accurately at the surface opposite from the surface for mounting the optical waveguide device when an AlN heater is used.

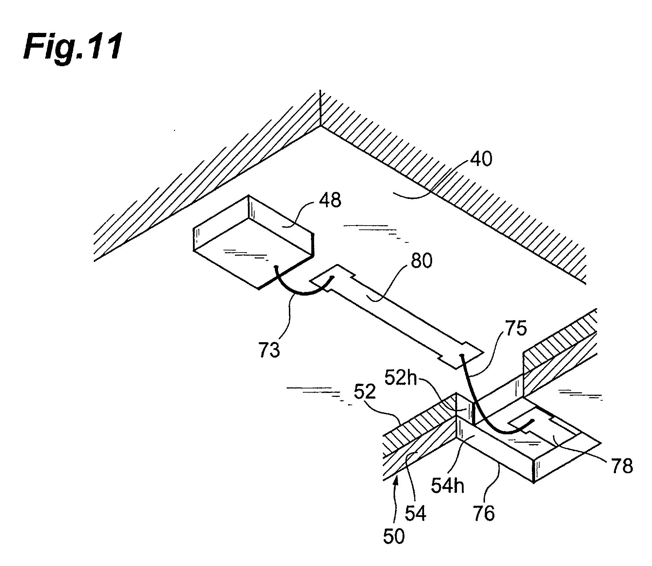

Fig. 11 is an enlarged perspective view showing the vicinity of the cutout 76. As shown in Figs. 10 and 11, the insulating substrate 50 has an upper layer 52 and a lower layer 54, whereas the bottom face of upper layer 52 is formed with the electrode pad 78. More specifically, the upper layer 52 is formed with a through hole 52h, whereas the lower layer 54 is formed with a through hole 54h such that a part of the bottom face of upper layer 52 is exposed. Also, they are configured such that at least a part of the electrode pad 78 is positioned at the exposing part of the bottom face of upper layer 52.

The bottom face of ceramics heater 40 is formed with an electrode pad 80, the thermistor 48 and the electrode pad 80 are connected to each other with a wire 73, and the electrode pads 78 and 80 are connected to each other with a wire 75. Since the wire 75 can be connected to the electrode pad 78 by way of the cutout 76, i.e., through holes 52h and 54h, this embodiment can simplify wiring as compared with cases where the wire 75 travels about the insulating substrate 50 and the like.

Also, since the wire connecting the thermistor 48 to an external electrode for supplying electric power thereto comes into contact with the ceramics heater 40 at the electrode pad 80, thereby attaining a temperature substantially equal to that of the ceramics heater 40, the temperature measurement for the ceramics heater 40 is less likely to be affected by the ambient temperature, whereby appropriate temperature measurement can be carried out.

The electrode pad 78 is connected to a lead pin 23 shown in Fig. 10, whereby continuity is established between the thermistor 48 and an external device. Such a thermistor electrode structure can prevent the thermistor electrode from lowering its temperature. When measuring the temperature controllability in the case where the ambient temperature was -40°C to 70°C, the temperature of ceramics heater 70 was found to be ±0.5°C or less, thus being less susceptible to the external temperature as compared with ±0.7°C in the first embodiment not subjected to the foregoing processing.

The case 20 of optical waveguide module 1 will now be explained with reference to Fig. 10. Two opposite faces of the cover 24 of case 20 are formed with insertion ports 24a, 24b for inserting optical fibers 4 therethrough. Two sheets 82, 84 are disposed in the cover 24 so as to be separated from its inner wall face by a predetermined distance. Each of the sheets 82, 84 is secured to a protrusion 24c with an adhesive. Specifically, the upper sheet 82 is secured to the center protrusion 24c, whereas the lower sheet 84 is connected to protrusions 24c at both ends. On the other hand, the package substrate 22 is provided with two sheets 86, 88 separated from its upper face by a predetermined distance. The outer peripheral part of each of the sheets 86, 88 is supported by a supporting member 89.

When the sheets 82, 84, 86, 88 are attached to the case 20 with a predetermined distance from the inner wall face thereof as such, the convection can be reduced between the inner wall face of case 20 and each sheet 82, 84, 86, 88, whereas an air layer is formed and acts as an insulating layer. This makes the heat of ceramics heater 40 harder to be released to the outside, whereby the optical waveguide device 2, which is an object to be heated, becomes easier to heat. The number of sheets is not limited to 2, but may be 1 or 3 or more.

Though the optical waveguide device 2 made of quartz is used in the first to fourth embodiments, a device using silica prepared on an Si substrate, and a device made of LiNbO₃ may also be used instead. Effects similar to those of each embodiment can be obtained in this case as well.

### Fifth Embodiment

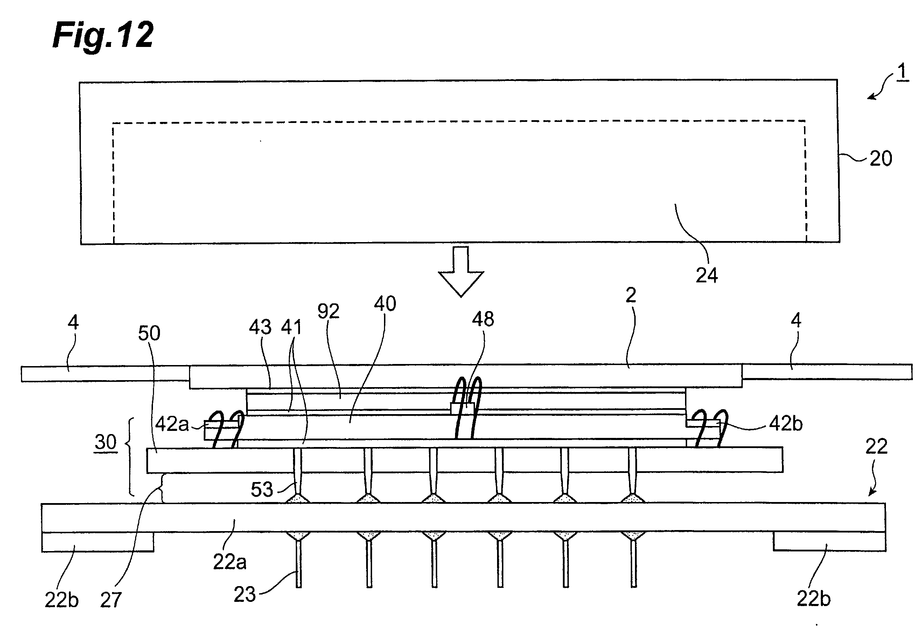

A fifth embodiment of the optical waveguide module in accordance with the present invention will now be explained with reference to Fig. 12. This embodiment differs from the first embodiment in the structure in which a matching plate 92 for matching CTE is inserted between the optical waveguide device 2 and the ceramics heater 40. As the matching plate 92, one having difference of 3 × 10⁻⁶/°C or less from the optical waveguide device 2 at room temperature in CTE is used.

Since the optical waveguide device 2 made of quartz (having a CTE of 0.5 × 10⁻⁶/°C) is used, an Fe-Ni alloy having a CTE of 2.0 × 10⁻⁶/°C is employed as the matching plate 92 in this embodiment. The matching plate 92 has a size of 40 mm × 20 mm × 0.5 mm.

Providing such a matching plate 92 can reduce the stress on the optical waveguide device 2. Hence, for measuring the stress on the optical waveguide device 2, a strain gauge was attached to the upper center part (the face opposite from the face joined to the inserted plate), and the difference in stress acting on the optical waveguide device 2 between the first embodiment and this embodiment was measured. As a result, it has been found that the thermal stress acting on the optical waveguide device 2 in this embodiment can be reduced to 1/3 that of the first embodiment. Though the first embodiment can sufficiently be used as an optical waveguide module, the effect lowering thermal stress in this embodiment is considered be quite advantageous in view of severer requirements which will be demanded in optical waveguide modules from now on.

When similar experiments were carried out with the optical waveguide device 2 changed to a device using silica (having a CTE of 1.3 × 10⁻⁶/°C) prepared on an Si substrate, results substantially the same as those in the case of quartz were obtained.

Also, substantially the same favorable results were obtained in this embodiment when similar experiments were carried out with the optical waveguide device 2 and inserted plate 2 changed to LiNbO₃ (having a CTE of 15 × 10⁻⁶/°C) and a Cu alloy (having a CTE of 16 × 10⁻⁶/°C), respectively.

### Sixth Embodiment

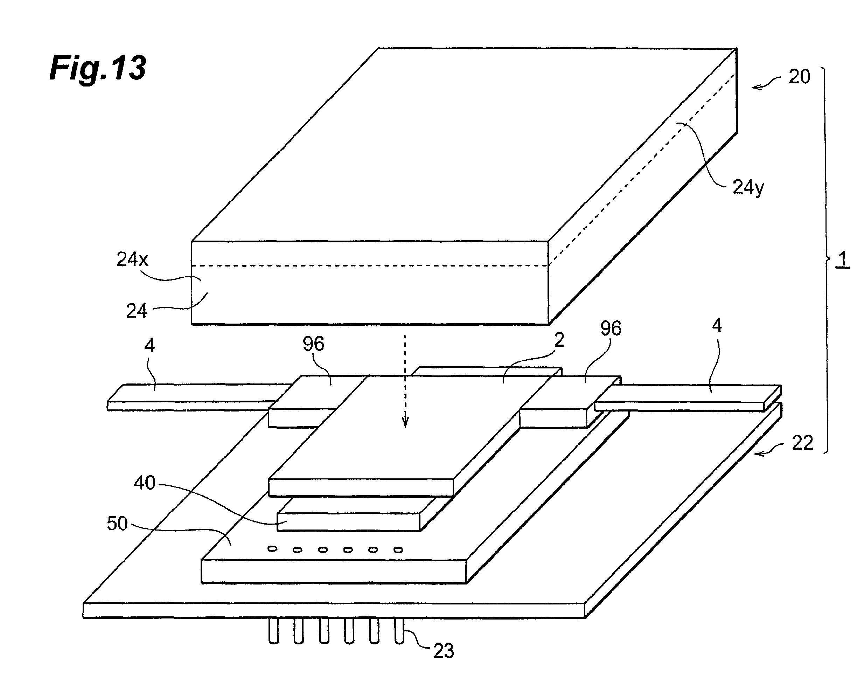

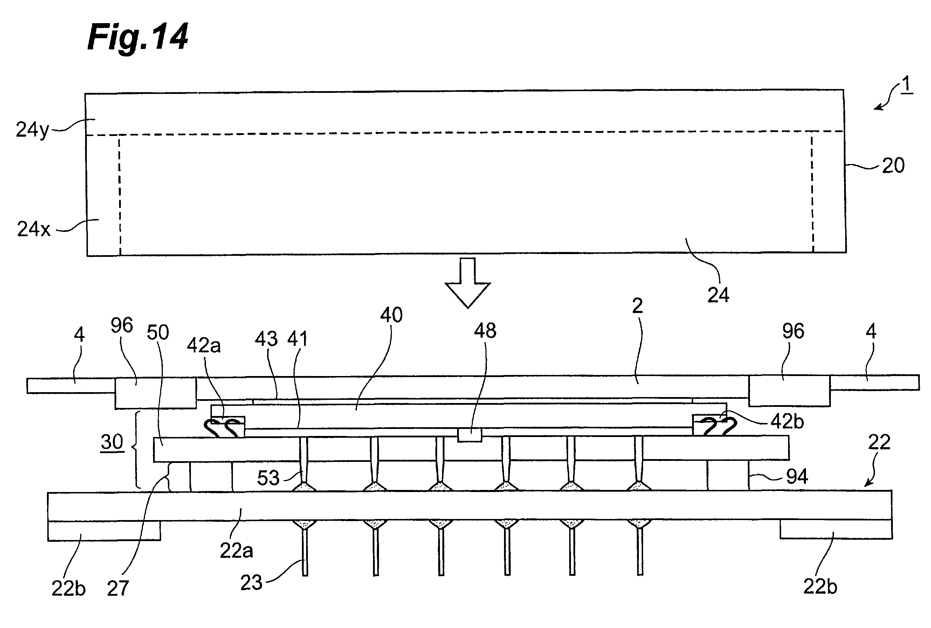

A sixth embodiment of the optical waveguide module in accordance with the present invention will now be explained with reference to the perspective view shown in Fig. 13 and the side view shown in Fig. 14. The optical waveguide device made of quartz in this embodiment has a larger size, i.e., 30mm (L) × 30mm (W) × 1mm (H), than that of the first embodiment. As a consequence, dimensions of the optical waveguide module are made different. The ceramics heater 40 has a size of 40 mm × 25 mm × 1 mm, the heater module 30 has a size of 50 mm × 40 mm × 2 mm, and the whole package has a size of 100 mm × 60 mm × 10 mm.

As the size of optical waveguide device 2 is made greater, it becomes harder to secure a space for mounting the thermistor 48 in the upper part of ceramics heater 40, i.e., the surface joined to the optical waveguide device 2, whereby the thermistor 48 is mounted to the lower part of ceramics heater 40, i.e., on the surface opposite from the surface joined to the optical waveguide device 2. The optical waveguide device 2 and the optical fiber 4 are connected each other with a fiber array 96. While the insulating substrate 50 and package substrate 22 are formed with an air layer 27 as an insulating layer, the insulating substrate 50 is secured onto the package substrate 22 by way of a spacer 94 so as to be stabilized structurally even when the air layer 27 is formed.

Investigations of characteristics of the foregoing optical waveguide module 1 yielded the following results. As for temperature uniformity, viewing with a thermoviewer at an ambient temperature of 0°C with the ceramics heater 40 having a temperature at 80°C revealed that the temperature distribution within the optical waveguide device 2 was suppressed to ±0.4°C or less. As for temperature controllability, it was found that, even when the ambient temperature was changed within the range from -40°C to 70°C, the ceramics heater 40 merely exhibited a temperature change of ±0.5°C or less, thus being harder to be affected by external temperature. Also, warping was small in the ceramics heater 40 and optical waveguide device 2, no anisotropy was observed in optical waveguide characteristics, and no defects of increases in loss, dependence on polarization caused by switching characteristics and birefringence, and the like occurred. Further, since the thermal insulating characteristic within the case was improved, this embodiment was capable of suppressing the power consumption to 4 W or less as well.

In this embodiment, the cover 24 is integral, so as to join the insulating substrate 22. In this form, however, there are cases where the optical fiber 4 is hard to attach. In these cases, the form may be changed such that the cover 24 is split into a side wall part 24x formed like a square tube and a top part 24y, the optical waveguide device 2 and optical fiber 4 are mounted in a state where the package substrate 22 and the side wall part 24x are once bonded to each other, and then the top part 24y is bonded or screwed thereto.

### Seventh Embodiment

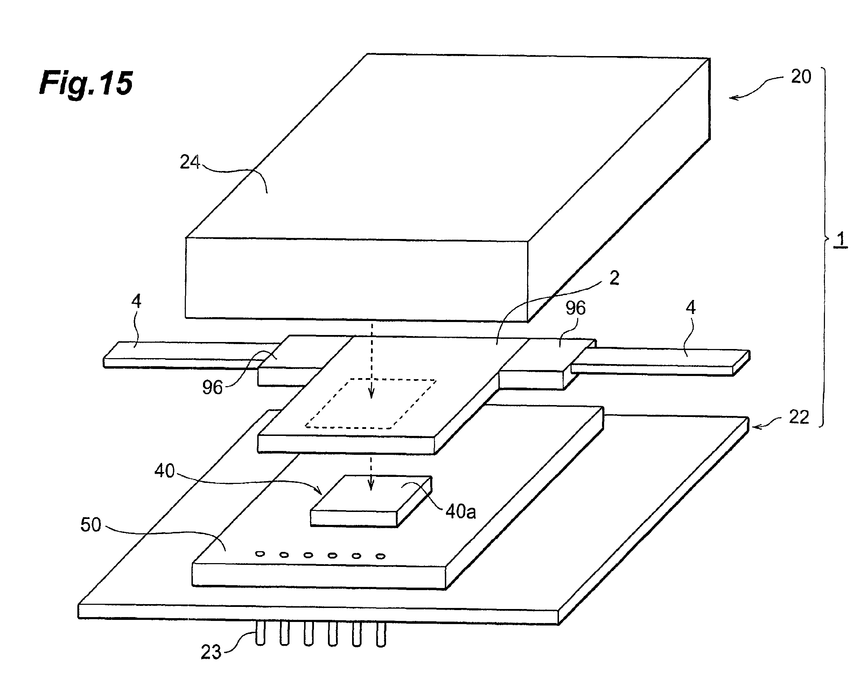

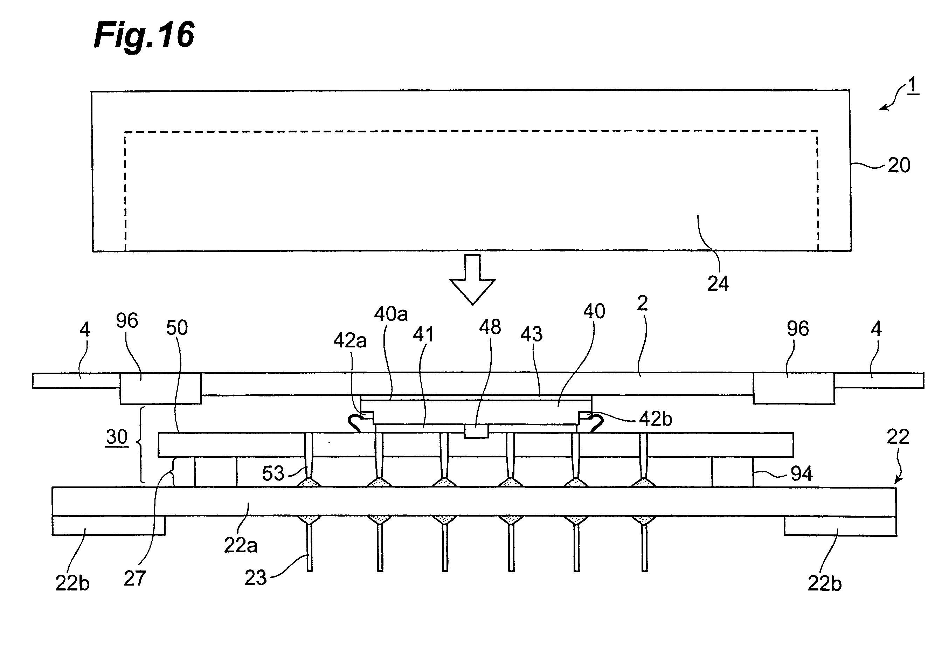

A seventh embodiment of the optical waveguide module in accordance with the present invention will now be explained with reference to the perspective view shown in Fig. 15 and the side view shown in Fig. 16. This embodiment differs from the sixth embodiment in dimensions of the ceramics heater 40. Detailed investigations of characteristics of the optical waveguide device 2 have revealed that an area requiring temperature uniformity does not cover the whole optical waveguide device 2, but is limited to the ceramics heater and its surroundings. Specifically, it has been found to be limited to an area of about 10 mm × 10 mm about the ceramics heater. Therefore, in this embodiment, the surface 40a of ceramics heater 40 for mounting the optical waveguide device 2 has an area smaller than that of the surface of optical waveguide device 2 facing the surface 40a. When the heating surface of ceramics heater 40 is made smaller than the optical waveguide device 2 as such, the power consumption can further be lowered. Specifically, by a design utilizing thermal simulations, the ceramics heater 40 is made with a size of 15 mm × 15 mm × 1 mm.

Investigations of characteristics of the foregoing optical waveguide module 1 yielded the following results. As for temperature uniformity, viewing with a thermoviewer at an ambient temperature of 0°C with the ceramics heater 40 having a temperature of 80°C revealed that the temperature distribution within the area of 10 mm × 10 mm necessitating temperature uniformity inside the optical waveguide device 2 was suppressed to ±0.4°C or less. As for temperature controllability, it was found that, even when the ambient temperature was changed within the range from -40°C to 70°C, the ceramics heater 40 merely exhibited a temperature change of ±0.5°C or less, thus being harder to be affected by external temperature. Since the size of ceramics heater 40 was made smaller, it was possible for this embodiment to suppress the power consumption to 2 W or less, as compared with the sixth embodiment yielding a power consumption of 4 W.

### Eighth Embodiment

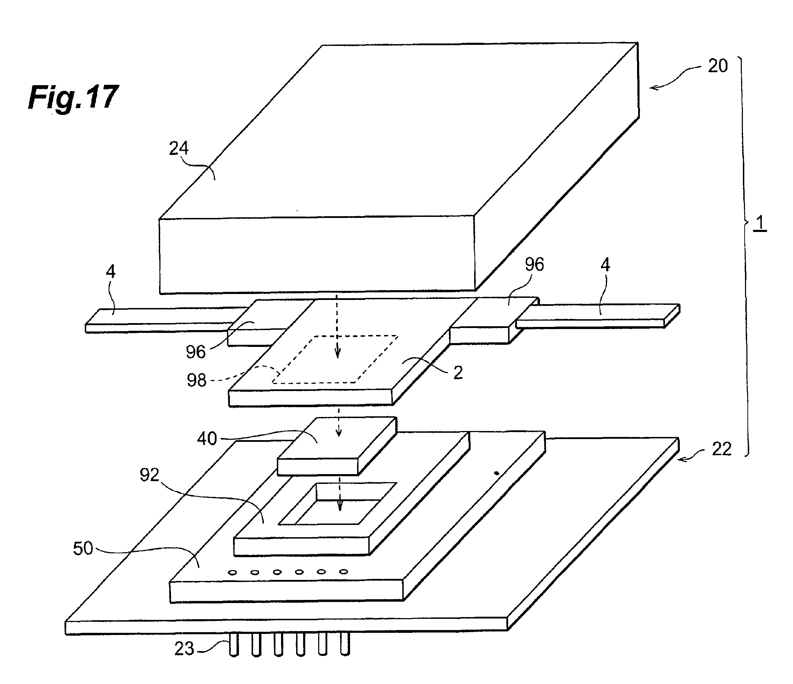

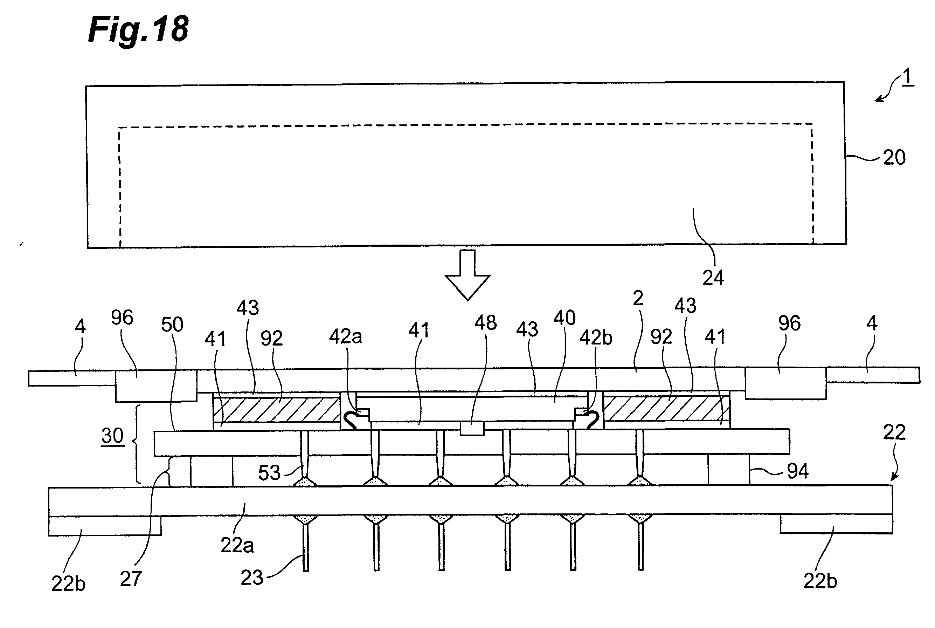

An eighth embodiment of the optical waveguide module in accordance with the present invention will now be explained with reference to the perspective view shown in Fig. 17 and the side view shown in Fig. 18. This embodiment differs from the eighth embodiment in the matching plate 92 (whose cross section is shown in Fig. 18) disposed so as to surround the ceramics heater 40. As the matching plate 92, one having difference of 3 × 10⁻⁶/°C or less from the optical waveguide device 2 at room temperature in CTE is used.

Since the optical waveguide device 2 made of quartz (having a CTE of 0.5 × 10⁻⁶/°C) is used, an Fe-Ni alloy having a CTE of 2.0 × 10⁻⁶/°C is employed as the matching plate 92 in this embodiment. The matching plate 92 has a size of 40 mm x 25 mm × 1 mm, which is identical to the size of ceramics heater 40 used in the sixth embodiment. Also, a hollow part of 15.5 mm × 15.5 mm is formed at the center by boring, so that the ceramics heater 40 having a size of 15 mm × 15 mm × 1 mm can fit therein.

Since the matching plate 92 surrounding the ceramics heater 40 is provided as such, the optical waveguide device 2 can firmly be secured onto the ceramics heater 40 even in cases where the ceramics heater 40 is smaller than the optical waveguide device 2. Preferably, for reliably securing the optical waveguide device 2, at least one side of the matching plate 92 is greater than the optical waveguide device 2 by about 1 mm to 10 mm in general. The material of matching plate 92 is required to be selected such that its CTE is matched by the optical waveguide device 2, whereby Fe-Ni alloys, Cu alloys, and the like can be selected as mentioned above in terms of heat spreader materials. The thickness of matching plate 92 may be such that, when the ceramics heater 40 is fitted into the matching plate 92, their upper faces are positioned at substantially the same height. When such a matching plate 92 is used, it can be bonded to the optical waveguide device 2 with an adhesive made of a resin which attains a solid form after bonding.

When characteristics of this optical waveguide module 1 were investigated, excellent characteristics were obtained as in the other embodiments. Also, the heater power consumption was 2 W or less at an ambient temperature of 0°C and a heater setting temperature of 80°C. Further, since the optical waveguide device 2 joined not only the ceramics heater 40 but also the matching plate 92, the stability upon installing the optical waveguide device 2 dramatically improved in this embodiment as compared with the seventh embodiment.

Also, substantially the same favorable results were obtained in this embodiment when similar experiments were carried out with the optical waveguide device 2 and inserted plate 2 changed to LiNbO₃ (having a CTE of 15 × 10⁻⁶/°C) and a Cu alloy (having a CTE of 16 × 10⁻⁶/°C), respectively.

### Ninth Embodiment

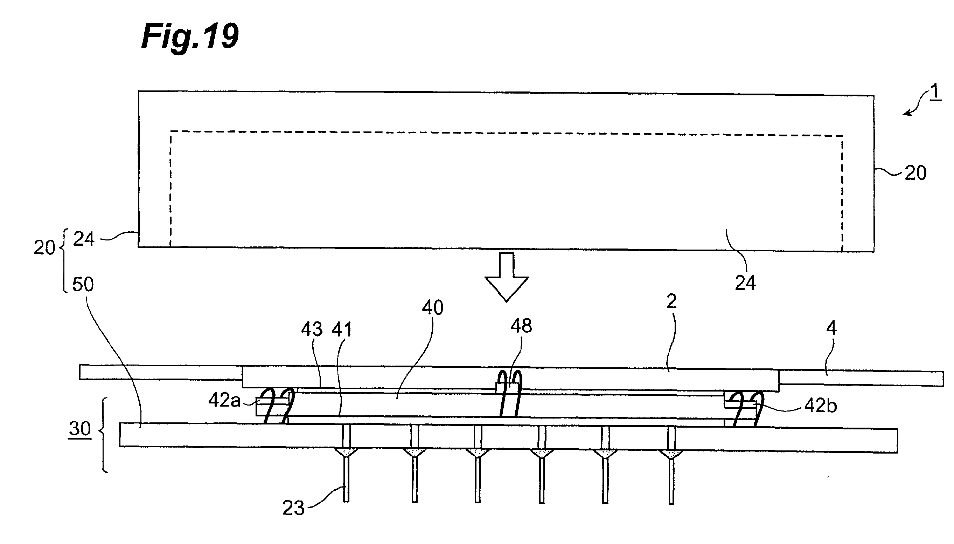

A ninth embodiment of the optical waveguide module in accordance with the present invention will now be explained with reference to Fig. 19. This embodiment differs from the first embodiment in that the insulating substrate 50 of heater module 30 plays a role similar to the package substrate 22 in the first embodiment. Namely, the insulating substrate 50 of heater module 30 constitutes a part of the case 20 as well. Consequently, the optical waveguide module 1 can have a thickness of 8 mm, which is smaller than 10 mm in the first embodiment. When characteristics of this optical waveguide module 1 were investigated, excellent characteristics were obtained as in the other embodiments.

### Tenth Embodiment

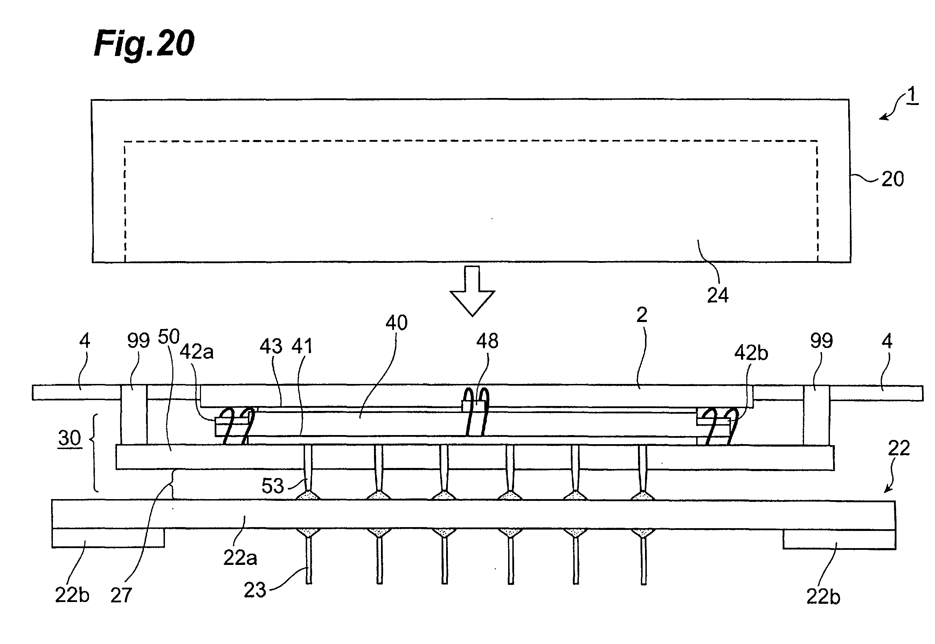

A tenth embodiment of the optical waveguide module in accordance with the present invention will now be explained with reference to Fig. 20. This embodiment differs from the first embodiment in clamping positions (securing positions) between the optical fibers 4 and optical waveguide device 2. Though the optical fibers 4 are secured by the insertion ports 24a, 24b of the case 20 in the first embodiment, the clamping positions are placed inside the case 20 in this embodiment. Specifically, the optical fibers 4 are secured by supporting members 99, 99 placed on the insulating substrate 50.

Such a configuration makes it unnecessary for the case 20 to carry out clamp designing of the optical fibers 4, whereby it becomes easier to change relative positions of the heater module 30 and case 20, alter the form of case 20, and so forth.

### Eleventh Embodiment

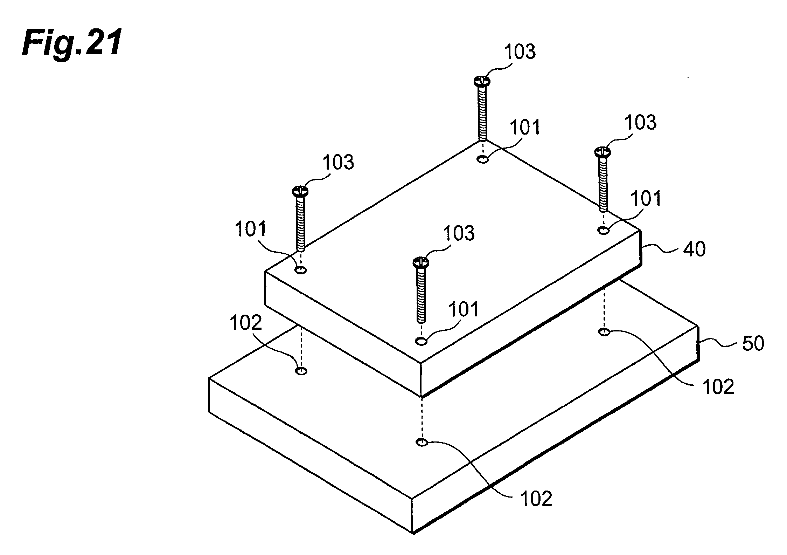

An eleventh embodiment of the optical waveguide module in accordance with the present invention will nowbe explained with reference to Fig. 21. This embodiment differs from the sixth embodiment in the technique of bonding the ceramics heater 40 to the insulating substrate 50. In the sixth embodiment, the ceramics heater 40 and insulating substrate 50 are bonded to each other with the resin 41. By contrast, they are secured to each other with screws in this embodiment.

As depicted, screw holes 101 each having a diameter of 1 mm are formed at four corners of the ceramics heater 40, respectively, whereas female threads 102 are cut at their corresponding positions in the insulating substrate 50. Then, screws 103 passing through their corresponding screw holes 101 engage their corresponding female threads 102, thereby securing the ceramics heater 40 and the insulating substrate 50 to each other. Also, for ensuring thermal contact between the ceramics heater 40 and insulating substrate 50, their gap is filled with a thermal compound. The same measurement as that in the sixth embodiment yielded similar results.

Though the third to eleventh embodiments employ the AlN heater comprising AlN ceramics 44, tungsten heating layer 42, and second AlN ceramics used in the first embodiment, the AlN heater comprising AlN ceramics 44, heating layer 42 made of silver palladium, and coating film 45 mainly composed of silica glass used in the second embodiment may be used as well.

### Examples

Examples performed mainly based on the optical waveguide module in accordance with the first or second embodiment will now be explained.

### Example 1

Concerning the ceramics heater 40 used in the first embodiment, the temperature uniformity of optical waveguide device 2 was measured while variously changing its surface roughness Ra. Usually, a temperature uniformity of ±0.5°C can be satisfied in the initial state at any Ra. However, it may be expected to deteriorate during reliability tests or actual use of the optical waveguide module if the Ra condition is inappropriate. Therefore, a damp heat test for exposing the optical waveguide device 2 to an atmosphere having a humidity of 85% at 85°C for 2000 hours was carried out, and then the ambient temperature and the temperature of ceramics heater 40 were set to 0°C and 80°C, respectively, at which the temperature uniformity of optical waveguide device 2 was observed with a thermoviewer. Table 1 shows the results. It was also found that, when a silicone resin having a viscosity of 10000 cps was used as the securing resins 41 and 43 in the ceramics heater 40, favorable temperature uniformity and temperature controllability were obtained after the reliability test if the surface roughness of ceramics heater 40 was at least 0.05 µm but not greater than 10 µm. In the case where the viscosity is 100000 cps, which corresponds to the case where the resin has changed with time, favorable temperature uniformity and temperature controllability cannot be obtained unless the surface roughness is controlled to so as to become 10 µm or less.

When the resin bonding the ceramics heater 40 in each of the samples failing to yield favorable temperature uniformity and temperature controllability after the reliability test was observed with a stereomicroscope at 10x, peelings and cracks having a size of 0.1 mm or greater were seen in the bonding resin. On the other hand, the ceramics heater 40 as a single unit was taken out after the test, and was observed with a thermoviewer at an ambient temperature of 0°C with the ceramics heater 40 having a temperature of 80°C, whereby results substantially the same as those observed before the reliability test were obtained. Also, no change was seen in the thermal conductivity of ceramics heater 40.

**TABLE 1**

| | Ra µm | Bonding resin | Temperature uniformity °C | Temperature controllability °C |
|---|---|---|---|---|
| Sample 1 | 0.1 | silicone (viscosity: 10000 cps) | ±0.5 | ±0.7 |
| Sample 2 | 10 | silicone (viscosity: 10000 cps) | ±0.5 | ±0.7 |
| Sample 3* | 100 | silicone (viscosity: 10000 cps) | ±1.0 | ±0.7 |
| Sample 4 | 10 | silicone (viscosity: 100000 cps) | ±0.5 | ±0.7 |
| Sample 5* | 15 | silicone (viscosity: 100000 cps) | ±1.0 | ±2.0 |
| Sample 6 | 0.05 | silicone (viscosity: 10000 cps) | ±0.5 | ±0.7 |
| Sample 7* | 0.01 | silicone (viscosity: 10000 cps) | ±1.0 | ±2.0 |

| | | | | |
|---|---|---|---|---|
| *: comparative example | | | | |

### Example 2

While variously changing the surface roughness Ra of the ceramics heater 40 used in Example 1, temperature characteristics after 2000 hours of the damp heat test were measured as in Example 1. Table 2 shows the results. It was found that, when a polyimide resin having a viscosity of 10000 cps was used as the securing resins 41 and 43 in the ceramics heater 40, favorable temperature uniformity and temperature controllability were obtained if the surface roughness of ceramics heater 40 was at least 0.05 µm but not greater than 10 µm.

When the resin bonding the ceramics heater 40 in each of the samples failing to yield favorable temperature uniformity and temperature controllability after the reliability test was observed with a stereomicroscope at 10x, peelings and cracks having a size of 0.1 mm or greater were seen in the bonding resin. On the other hand, the ceramics heater 40 as a single unit was taken out after the test, and was observed with a thermoviewer at an ambient temperature of 0°C with the ceramics heater 40 having a temperature of 80°C, whereby results substantially the same as those observed before the reliability test were obtained. Also, no change was seen in the thermal conductivity of ceramics heater 40.

**TABLE 2**

| | Ra µm | Bonding resin | Temperature uniformity °C | Temperature controllability °C |
|---|---|---|---|---|
| Sample 8* | 120 | polyimide | ±1.0 | ±2.0 |
| Sample 9 | 10 | polyimide | ±0.5 | ±0.7 |
| Sample 10 | 0.05 | polyimide | ±0.5 | ±0.7 |
| Sample 11* | 0.01 | polyimide | ±1.0 | ±2.0 |

| | | | | |
|---|---|---|---|---|
| *: comparative example | | | | |

### Example 3

As shown in Figs. 2 to 4, the glass coating layers were disposed on the upper side (upper side in Fig. 4) of the first AlN ceramics layer 44 and on the lower side (lower side in Fig. 4) of the second AlN ceramics layer 46, which were resin bonding faces of the ceramics heater 40 used in Example 1. The films were formed by firing after screen printing. Various kinds of film thickness were formed by screen printing, and temperature characteristics after 2000 hours of the damp heat test were measured as in Example 1. Table 3 shows the results. It was found that favorable temperature uniformity and temperature controllability were obtained after the reliability test as well when the film thickness of glass coating layers was at least 1 µm but not greater than 500 µm. Also, the film forming time was remarkably shortened when the film thickness was 100 µm or less.

When the ceramics heater 40 in each of the samples failing to yield favorable temperature uniformity and temperature controllability after the reliability test was observed with a stereomicroscope at 10x, the glass coating layers did not completely cover the AlN ceramics layers 44, 46 in the samples in which the film thickness of coating layer was 5 µm or less, whereby the AlN ceramics layers 44, 46 were partly exposed, whereas peelings and cracks having a size of 0.1 mm or greater were seen in the bonding resin joined to this part. Also, peelings and cracks having a size of 0.1 mm or greater were seen in the glass layer of the samples whose glass had a film thickness of 500 µm or greater.

**TABLE 3**

| | Film thickness µm | Temperature uniformity °C | Temperature controllability °C |
|---|---|---|---|
| Sample 12* | 0.5 | ±0.9 | ±1.9 |
| Sample 13 | 1 | ±0.5 | ±0.7 |
| Sample 14 | 500 | ±0.5 | ±0.7 |
| Sample 15* | 600 | ±1.0 | ±2.0 |

| | | | |
|---|---|---|---|
| *: comparative example | | | |

### Example 4

Using the ceramics heater 40 employed in the second embodiment, the following experiment was carried out. The coating films provided in the ceramics heater 40 were formed by firing after screen printing. Various kinds of film thickness were formed by screen printing, and temperature characteristics after 2000 hours of the damp heat test were measured as in Example 1. Table 4 shows the results. It was found that favorable temperature uniformity and temperature controllability were obtained when the film thickness was at least 10 µm but not greater than 500 µm. Also, the film forming time was remarkably shortened when the film thickness was 100 µm or less.

When the ceramics heater 40 in each of the samples failing to yield favorable temperature uniformity and temperature controllability after the reliability test was observed with a stereomicroscope at 10x, it was seen that peelings and cracks having a size of 0.1 mm or greater were generated due to differences in level between the heating circuit 42 and AlN ceramics in samples in which the glass film thickness was smaller than 10 µm.

**TABLE 4**

| | | | |
|---|---|---|---|
| | Film thickness µm | Temperature uniformity °C | Temperature controllability °C |
| Sample 16* | 5 | ±0.9 | ±1.9 |
| Sample 17 | 10 | ±0.5 | ±0.7 |

| | | | |
|---|---|---|---|
| *: comparative example | | | |

### Example 5

As shown in Figs. 2 to 4, the following Al layers were disposed on the upper side (upper side in Fig. 4) of the first AlN ceramics layer 44 and on the lower side (lower side in Fig. 4) of the second AlN ceramics layer 46, which were resin bonding faces of the ceramics heater 40 used in Example 1. Namely, the ceramics heater 40 was put into a vacuum chamber for vapor deposition, which was vacuumed until the degree of vacuum therewithin became 1.33 × 10⁻³ Pa or lower, and then Al layer were deposited while using at least 99.9 wt% of Al as a vapor deposition source.

The degree of vacuum during vapor deposition was at least 1.33 × 10⁻¹ Pa but not higher than 1.33 × 10⁻³ Pa, whereas the temperature of ceramics heater 40 was between 100°C and 200°C. Also, Al films with various thickness values were formed. On the other hand, the crystal particle size of Al films was 1 µm. The naturally oxidized film thickness formed on Al films was 500 × 10⁻¹⁰ m when measured by micro-Auger electron spectroscopy. Temperature characteristics of these samples after 2000 hours of the damp heat test were measured as in Example 1. Table 5 shows the results. It was found that favorable temperature uniformity and temperature controllability were obtained after the reliability test as well when the Al film thickness was at least 1 µm but not greater than 100 µm. Also, the film forming time was remarkably shortened when the Al film thickness was 20 µm or less.

When the ceramics heater 40 in each of the samples failing to yield favorable temperature uniformity and temperature controllability after the reliability test was observed with a stereomicroscope at 10x, peelings and cracks having a size of 0.1 mm or greater were seen in the bonding resin bonded thereto in samples in which the Al film thickness was smaller than 1 µm.

**TABLE 5**

| | Film thickness µm | Temperature uniformity °C | Temperature controllability °C |
|---|---|---|---|
| Sample 18* | 0.5 | ±0.9 | ±1.9 |
| Sample 19 | 1 | ±0.5 | ±0.7 |
| Sample 20 | 20 | ±0.5 | ±0.7 |
| Sample 21 | 100 | ±0.5 | ±0.7 |

| | | | |
|---|---|---|---|
| *: comparative example | | | |

### Example 6

As shown in Figs. 2 to 4, the following Al layers were disposed as in Example 5 on the upper side (upper side in Fig. 4) of the first AlN ceramics layer 44 and on the lower side (lower side in Fig. 4) of the second AlN ceramics layer 46, which were resin bonding faces of the ceramics heater 40 used in Example 1. Films with various Al crystal particle sizes were formed. On the other hand, the film thickness was 2 µm. The naturally oxidized film thickness formed on Al films was 500 × 10⁻¹⁰ m when measured by micro-Auger electron spectroscopy. Temperature characteristics of these samples after 2000 hours of the damp heat test were measured as in Example 1. Table 6 shows the results. It was found that favorable temperature uniformity and temperature controllability were obtained after the reliability test as well when the crystal particle size was at least 0.1 µm but not greater than 10 µm.

When the ceramics heater 40 in each of the samples failing to yield favorable temperature uniformity and temperature controllability after the reliability test was observed with a stereomicroscope at 10x, peelings and cracks having a size of 0.1 mm or greater were seen in the bonding resin.

**TABLE 6**

| | Crystal particle size µm | Temperature uniformity °C | Temperature controllability °C |
|---|---|---|---|
| Sample 22* | 0.05 | ±1.0 | ±2.0 |
| Sample 23 | 0.1 | ±0.5 | ±0.7 |
| Sample 24 | 10 | ±0.5 | ±0.7 |
| Sample 25* | 20 | ±0.9 | ±1.9 |

| | | | |
|---|---|---|---|
| *: comparative example | | | |

### Example 7

As shown in Figs. 2 to 4, the following Al layers were disposed as in Example 5 on the upper side (upper side in Fig. 4) of the first AlN ceramics layer 44 and on the lower side (lower side in Fig. 4) of the second AlN ceramics layer 46, which were resin bonding faces of the ceramics heater 40 used in Example 1. The oxidized film thickness of Al layers was changed intentionally. On the other hand, the crystal particle size was 1.0 µm, whereas the film thickness was 2 µm. Temperature characteristics of these samples after 2000 hours of the damp heat test were measured as in Example 1. Table 7 shows the results. It was found that favorable temperature uniformity and temperature controllability were obtained after the reliability test as well when the oxidized film thickness was at least 10 × 10⁻¹⁰ m but not greater than 800 × 10⁻¹⁰ m.

When the ceramics heater 40 in each of the samples failing to yield favorable temperature uniformity and temperature controllability after the reliability test was observed with a stereomicroscope at 10x, peelings and cracks having a size of 0.1 mm or greater were seen in the bonding resin in samples in which the oxidized film thickness was smaller than 10 × 10⁻¹⁰ m. On the other hand, it was seen that peelings and cracks having a size of 0.1 mm or greater occurred in Al layers in samples in which the oxidized film thickness was greater than 800 x 10⁻¹⁰ m.

**TABLE 7**

| | Oxidized film thickness × 10⁻¹⁰ m | Temperature uniformity °C | Temperature controllability °C |
|---|---|---|---|
| Sample 26* | 5 | ±1.0 | ±2.0 |
| Sample 27 | 10 | ±0.5 | ±0.7 |
| Sample 28 | 800 | ±0.5 | ±0.7 |
| Sample 29* | 900 | ±1.0 | ±2.0 |

| | | | |
|---|---|---|---|
| *: comparative example | | | |

### Example 8

As shown in Figs. 2 to 4, the following Al layers 82 were disposed as in Example 6 on the upper side (upper side in Fig. 4) of the first AlN ceramics layer 44 and on the lower side (lower side in Fig. 4) of the second AlN ceramics layer 46, which were resin bonding faces of the ceramics heater 40 used in Example 1. Here, the purity of Al to be vapor-deposited was lowered to 99%. The crystal particle size was 1.0 µm, whereas the film thickness was 2 µm. The naturally oxidized film thickness formed on Al films was 500 × 10⁻¹⁰ m when measured by micro-Auger electron spectroscopy. Temperature characteristics of these samples after 2000 hours of the damp heat test were measured as in Example 1. Table 8 shows the results. It was found that the temperature uniformity and temperature controllability were slightly lower than those obtained when the purity was 99.9%.

**TABLE 8**

| | Al purity % | Temperature uniformity °C | Temperature controllability °C |
|---|---|---|---|
| Sample 30A | 99.9 | ±0.5 | ±0.7 |
| Sample 30B* | 99 | ±0.6 | ±0.8 |

### Example 9

While variously changing the thickness values of the air layer 64 disposed between the ceramics heater 40 and insulating substrate 50, and the insulating layer 27 made of an air layer disposed between the insulating substrate 50 and package substrate 22 in the second embodiment, temperature uniformity characteristics were measured as in Example 1. Table 9 shows the results. It was seen that an air layer thickness of at least 0.01 mm but not greater than 5 mm made it possible for the temperature uniformity to become ±0.5°C or less.

**TABLE 9**

| | Heater to insulating substrate mm | Insulating substrate to package mm | Temperature uniformity °C |
|---|---|---|---|
| Sample 31* | 6 | 6 | ±0.7 |
| Sample 32* | 6 | 2 | ±0.7 |
| Sample 33* | 2 | 6 | ±0.7 |
| Sample 34 | 5 | 5 | ±0.5 |
| Sample 35 | 0.01 | 0.01 | ±0.4 |
| Sample 36* | 0.005 | 0.005 | ±0.7 |
| Sample 37* | 0.005 | 2 | ±0.6 |
| Sample 38* | 2 | 0.005 | ±0.6 |

| | | | |
|---|---|---|---|
| *: comparative example | | | |

### Example 10

In the first embodiment, a silicone type resin having a viscosity of 10000 cps and a thermal conductivity of 1 W/mK was employed as the resin bonding the ceramics heater 40 to the optical waveguide device 2 and, while variously changing its thickness, temperature uniformity characteristics weremeasuredas in Example 1. Table 10 shows the results. It was seen that the resin 43 having a thickness of at least 10 µm but not greater than 500 µm made it possible for the temperature uniformity to become ±0.5°C or less. As a result of investigations of cross sections of sample 39 for finding out reasons why the temperature uniformity thereof deteriorated, a status of the resin partly breaking was seen. Though it is also presumed that unevenness in resin coating was caused by the fact that the resin was thin, it is further considered that the resin failed to completely absorb the thermal stress occurring due to the difference in CTE between the optical waveguide device 2 and ceramics heater 40, thereby breaking.

**TABLE 10**

| | Resin thickness µm | Temperature uniformity °C |
|---|---|---|
| Sample 39* | 5 | ±0.7 |
| Sample 40 | 10 | ±0.5 |
| Sample 41 | 200 | ±0.5 |
| Sample 42 | 500 | ±0.5 |
| Sample 43* | 600 | ±0.7 |

| | | |
|---|---|---|
| *: comparative example | | |

### Example 11

The experiment identical to that of Example 10 was carried out while using one silicone resin having thermal conductivity of 0.5 W/mK and another having thermal conductivity of 0.3 W/mK. Table 11 shows the results.

**TABLE 11**

| | Resin thermal conductivity W/mK | Resin thickness µm | Temperature uniformity °C |
|---|---|---|---|
| Sample 44* | 0.5 | 5 | ±0.7 |
| Sample 45 | 0.5 | 10 | ±0.5 |
| Sample 46 | 0.5 | 200 | ±0.5 |
| Sample 47 | 0.5 | 500 | ±0.5 |
| Sample 48* | 0.5 | 600 | ±0.8 |
| Sample 49* | 0.3 | 10 | ±0.8 |
| Sample 50* | 0.3 | 500 | ±1.0 |

| | | | |
|---|---|---|---|
| *: comparative example | | | |

### Example 12

In the first embodiment, a silicone type thermal compound having a thermal conductivity of 1 W/mK was used as the resin 43 for bonding the ceramics heater 40 to the optical waveguide device 2. Since they could not be secured with the thermal compound alone, the optical waveguide device was fixed at only four positions in end parts thereof with a silicone resin having a viscosity of 10000 cps and a thermal conductivity of 1 W/mK, and temperature uniformity characteristics were measured as in Example 1. The thermal compound thickness at the center part of optical waveguide device was 50 µm. Preparing 10 identical samples, temperature uniformity characteristics of their respective optical waveguide devices 2 were measured. However, only two samples achieved a temperature uniformity of ±0.5°C.

### Example 13

In the first embodiment 1, the following circuit was added to the ceramics heater. Namely, as shown in Fig. 3, the ceramics heater 40 was provided with a heating circuit 42 having a resistance value of about 0.5 to 10 Ω adapted to generate heat when energized. Also, while both ends of the heating circuit 42 were provided with electrodes 42a, 42b for causing a current to flow through the heating circuit 42, a part of the heating circuit 42 in this example was further formed from an alloy composed of 40 wt% of tin and 60 wt% of lead, which was solder paste sintered after screen printing.

Next, for simulating a rapid temperature rise in AlN heater caused by a malfunction of a temperature regulating circuit, electric power was continuously supplied to the heater, so as to raise the temperature of AlN heater rapidly. As a result, once the heater temperature reached 200°C, temperature did not rise anymore. After this experiment, the individual members dissemble and investigated, whereby it was seen that solder parts formed in the heater were melted and broken. On the other hand, it was seen that the other resin members were not broken. While conductors made of solder were not broken, it was considered that, since the temperature rise is higher in the heater, solder parts of the heater broke at first without the breakage reaching the conductors.

### Example 14

While Example 13 used an AlN heater in which a part of the heating circuit was formed from solder, Example 14 used a normal AlN heater. The same experiment as that of Example 13 was carried out while the leads for connecting the ceramics heater 40 to the insulating substrate 50 were changed from normal copper wires to conductors made of solder. As a result, it was seen that, once the heater temperature reached 210°C, temperature did not rise anymore. After this experiment, the individual members dissemble and investigated, whereby it was seen that the conductors made of solder were melted and broken. On the other hand, it was seen that the other resin members were not broken.

Though the invention achieved by the inventors is specifically explained with reference to embodiments in the foregoing, the present invention is not restricted to the above-mentioned embodiments. For example, the heater module of the present invention can heat not only optical waveguide devices made of quartz, silica, and LiNbO₃, but also those made of resins and the like. Also, the present invention is applicable to optical waveguide devices having a size smaller or greater than those of the above-mentioned embodiments. Further, it is not limited to the above-mentioned embodiments in terms of resins used for bonding and the like, and materials used for the case and the like.

### Industrial Applicability

In the heater module and optical waveguide module in accordance with the present invention, as explained in the foregoing, a ceramics layer is formed from AlN having a high thermal conductivity, so that the heat transmitted from the heating circuit diffuses into the ceramics layer substantially uniformly, whereby the optical waveguide device mounted on the ceramics layer is heated uniformly. Also, since the ceramics heater is supported by an insulating substrate having a thermal insulating characteristic, the heat generated by the heating circuit is prevented from being released from the insulating substrate and thereby making the temperature distribution of ceramics heater uneven, whereby the temperature uniformity of optical waveguide device can further be improved.

Since the ceramics heater of the present invention is formed from AlN, its thermal conductivity is high, so that a heat spreader which has been indispensable when using other heaters having a low thermal conductivity can be eliminated, whereby the thickness of heater module and optical waveguide module can dramatically be reduced.

Further, since AlN has a high thermal conductivity and requires no heat spreader, the power consumption of heater can greatly be reduced when the ceramics heater is designed smaller.

## Claims

1. A heater module for heating an optical waveguide device, said heater module comprising:
a ceramics heater having a heating circuit adapted to generate heat when energized, and an AlN ceramics layer stacked on said heating circuit.

2. A heater module according to claim 1, further comprising an insulating substrate supporting said ceramics heater and having a thermal insulating characteristic.

3. A heater module according to claim 2, wherein said insulating substrate contains alumina, or alumina and silica glass.

4. A heater module according to claim 2, wherein said insulating substrate contains a resin, or a resin and silica glass.

5. A heater module according to claim 2, wherein said insulating substrate has a plurality of protrusions for supporting said ceramics heater, and wherein an air layer is formed about each of said protrusions.

6. A heater module according to claim 5, wherein said air layer has a thickness of at least 0.01 mm but not greater than 5 mm.

7. A heater module according to claim 2, wherein said ceramics heater and said insulating substrate are bonded to each other with a resin.

8. A heater module according to claim 2, wherein said ceramics heater and said insulating substrate are fastened to each other by screwing.

9. A heater module according to claim 2, having pressing means for pressing said ceramics heater toward said insulating substrate.

10. A heater module according to claim 2, further comprising a temperature detecting device for detecting a temperature of said ceramics heater;
wherein said temperature detecting device is bonded to a surface of said ceramics heater opposite from a surface mounted with said optical waveguide;
wherein said insulating substrate has a predetermined cutout; and
wherein an electrode connected to said temperature detecting device is disposed within said cutout.

11. A heater module according to claim 10, wherein a wire connecting said temperature detecting device to an external power supply for supplying said temperature detecting device with electric power is in contact with said ceramics heater.

12. A heater module according to claim 1, having a second AlN ceramics layer beneath said heating circuit.

13. A heater module according to claim 1, wherein said heating circuit is mainly composed of tungsten, molybdenum, or silver palladium.

14. A heater module according to claim 1, wherein said ceramics heater has a coating film mainly composed of silica glass on a surface thereof.

15. A heater module according to claim 1, wherein said ceramics heater has a surface roughness of at least 0.05 µm but not greater than 10 µm in terms of Ra.

16. A heater module according to claim 1, wherein said ceramics heater has a surface formed with an oxide layer or glass coat layer.

17. A heater module according to claim 1, wherein said ceramics heater has a surface formed with an Al layer by vapor deposition.

18. A heater module according to claim 1, wherein a current stops flowing through said heating circuit at a predetermined temperature or higher.

19. A heater module according to claim 18, wherein a part of said heating circuit is formed from an alloy of tin and lead.

20. A heater module according to claim 18, wherein said heating circuit and a terminal connected to an external power supply are connected to each other with a wire formed from an alloy of tin and lead.

21. An optical waveguide module comprising:
the heater module according to one of claims 1 to 20; and
an optical waveguide device mounted on said ceramics heater of said heater module.

22. An optical waveguide module according to claim 21, wherein a matching member, having a difference of 3 × 10⁻⁶/°C or less from said optical waveguide device at room temperature in the coefficient of thermal expansion, is inserted between said optical waveguide device and said ceramics heater.

23. An optical waveguide module according to claim 22, wherein said matching member is formed from an Fe-Ni alloy.

24. An optical waveguide module according to claim 22, wherein said matching member is formed from Cu or a Cu alloy.

25. An optical waveguide module according to claim 21, wherein said ceramics heater and said optical waveguide device are bonded to each other with an adhesive made of a resin.

26. An optical waveguide module according to claim 21, wherein a surface of said ceramics heater for mounting said optical waveguide device has an area smaller than that of a surface of said optical waveguide device facing said mounting surface.

27. An optical waveguide module according to claim 26, wherein a matching member, having a difference of 3 × 10⁻⁶/°C or less from said optical waveguide device at room temperature in the coefficient of thermal expansion, is disposed about said ceramics heater, said matching member and said optical waveguide device being bonded to each other.

28. An optical waveguide module according to claim 27, wherein said matching member is formed from an Fe-Ni alloy.

29. An optical waveguide module according to claim 27, wherein said matching member is formed from Cu or a Cu alloy.

30. An optical waveguide module according to claim 21, further comprising a case for accommodating said optical waveguide device and said ceramics heater.

31. An optical waveguide module according to claim 30, comprising an insulating substrate supporting said ceramics heater and having a thermal insulating characteristic, said case accommodating said insulating substrate.

32. An optical waveguide module according to claim 30, wherein said heater module constitutes a part of said case.

33. An optical waveguide module according to claim 30, wherein said case is mainly composed of copper tungsten, cobalt, iron, nickel, alumina, or aluminum nitride.

34. An optical waveguide module according to claim 30, wherein said case is mainly composed of a resin or silica glass.

35. An optical waveguide module according to claim 30, wherein an insulating layer having a thermal conductivity of 0.5 W/mK or less is disposed about said heater module.

36. An optical waveguide module according to claim 35, wherein said insulating layer is an air layer having a thickness of at least 0.01 mm but not greater than 5 mm.

37. An optical waveguide module according to claim 30, wherein said case has therewithin a partition wall extending from a surface facing said optical waveguide device toward said optical waveguide device.

38. An optical waveguide module according to claim 30, wherein said case comprises a sheet separated from an inner wall face of said case by a predetermined distance.

39. An optical waveguide module according to claim 30, wherein an optical fiber is clamped on said optical waveguide device, a clamping position between said optical fiber and said optical waveguide device being inside said case.
